# EUROPEAN PATENT SPECIFICATION

(11) **EP 4 581 847 B1**
(45) Date of publication and mention of the grant of the patent: **05.08.2026**
(21) Application number: 23773123.7
(22) Date of filing: 25.08.2023
(51) Int. Cl.: H04W 4/40, H04W 72/04, G08G 1/16

(54) **DYNAMIC AGGREGATED OCCUPANCY GRID GENERATION**
DYNAMISCHE AGGREGIERTE BELEGUNGSRASTERERZEUGUNG
GÉNÉRATION DE GRILLE D'OCCUPATION AGRÉGÉE DYNAMIQUE

(30) Priority: 29.08.2022 GR 20220100713
(43) Date of publication of application: 09.07.2025
(73) Proprietor: Qualcomm Incorporated, San Diego, CA 92121-1714 (US)
(72) Inventor: STEFANATOS, Stelios, San Diego, CA 92121-1714 (US); VASSILOVSKI, Dan, San Diego, CA 92121-1714 (US); PATIL, Shailesh, San Diego, CA 92121-1714 (US); GUBESKYS, Arthur, San Diego, CA 92121-1714 (US); ASHOUR, Mahmoud, San Diego, CA 92121-1714 (US); WU, Shuanshuan, San Diego, CA 92121-1714 (US)
(74) Representative: Jaeger, Michael David
(86) International application number: PCT/US2023/072950
(87) International publication number: WO 2024/050287

(56) References cited:
- US-A1- 2018 059 231
- US-A1- 2019 387 410

## Description

### CROSS REFERENCE

The present Application for Patent claims the benefit of Greece Patent Application No. 20220100713 by STEFANATOS et al., entitled "DYNAMIC AGGREGATED OCCUPANCY GRID GENERATION," filed August 29, 2022.

### FIELD OF TECHNOLOGY

The following relates to wireless communications, including dynamic aggregated occupancy grid generation.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations, each supporting wireless communication for communication devices, which may be known as user equipment (UE).

In some examples, a wireless communications system may support one or more automotive applications such as advanced driver-assistance systems (ADAS) or positioning. To support the one or more automotive applications, a UE (e.g., vehicle) may transmit occupancy information to a network entity. The occupancy information may inform the network entity of objects or other UEs within a vicinity of the UE.

US 2018/059231 A1 discloses to aggregate for a geographic area sensor data from a plurality of devices to create a global occupancy grid.

### SUMMARY

The described techniques relate to improved methods, systems, devices, and apparatuses that support dynamic aggregated occupancy grid generation. For example, the described techniques provide for a network entity to generate an aggregated occupancy grid. In some examples, the network entity may transmit control information indicating an occupancy grid (e.g., a configuration associated with the occupancy grid) to a user equipment (UE). The occupancy grid may comprise a set of cells corresponding to a geographical area and the set of cells may correspond to a set of resource elements (REs) of a time-frequency grid. Upon receiving the control information, the UE may receive, from one or more sensors, signaling indicating occupancy information for one or more cells of the set of cells and transmit, for each cell of the one or more cells that are occupied, signaling via an RE that corresponds to the cell that is occupied. The network entity may monitor the set of REs and determine whether each cell of the set of cells is occupied based on an energy level of an RE corresponding to the cell. If the energy level of the RE exceeds the threshold, the network entity may determine the cell corresponding to the RE is occupied. If the energy level of the RE is below the threshold, the network entity may determine the cell corresponding to the RE is unoccupied. The network entity may generate an aggregated occupancy grid based on determining whether each cell of the set of cells is occupied and potentially transmit signaling indicating the aggregated occupancy grid to the UE.

A method for wireless communication at a UE is described. The method may include receiving control information indicating an occupancy grid including a set of multiple cells corresponding to a geographical area, cells of the set of multiple cells corresponding to REs of a set of multiple REs of a time-frequency resource grid, receiving, from one or more sensors, first signaling indicating occupancy information for a set of cells of the set of multiple cells, and transmitting, for each cell of the set of cells that is occupied according to the occupancy information, second signaling via a RE of the set of multiple REs that corresponds to a cell that is occupied.

An apparatus for wireless communication at a UE is described. The apparatus may include a processor, memory coupled with the processor, and instructions stored in the memory. The instructions may be executable by the processor to cause the apparatus to receive control information indicating an occupancy grid including a set of multiple cells corresponding to a geographical area, cells of the set of multiple cells corresponding to REs of a set of multiple REs of a time-frequency resource grid, receive, from one or more sensors, first signaling indicating occupancy information for a set of cells of the set of multiple cells, and transmit, for each cell of the set of cells that is occupied according to the occupancy information, second signaling via a RE of the set of multiple REs that corresponds to a cell that is occupied.

Another apparatus for wireless communication at a UE is described. The apparatus may include means for receiving control information indicating an occupancy grid including a set of multiple cells corresponding to a geographical area, cells of the set of multiple cells corresponding to REs of a set of multiple REs of a time-frequency resource grid, means for receiving, from one or more sensors, first signaling indicating occupancy information for a set of cells of the set of multiple cells, and means for transmitting, for each cell of the set of cells that is occupied according to the occupancy information, second signaling via a RE of the set of multiple REs that corresponds to a cell that is occupied.

A non-transitory computer-readable medium storing code for wireless communication at a UE is described. The code may include instructions executable by a processor to receive control information indicating an occupancy grid including a set of multiple cells corresponding to a geographical area, cells of the set of multiple cells corresponding to REs of a set of multiple REs of a time-frequency resource grid, receive, from one or more sensors, first signaling indicating occupancy information for a set of cells of the set of multiple cells, and transmit, for each cell of the set of cells that is occupied according to the occupancy information, second signaling via a RE of the set of multiple REs that corresponds to a cell that is occupied.

Some examples of the method, apparatuses, and non-transitory computer-readable medium described herein may further include operations, features, means, or instructions for receiving third signaling indicating an aggregated occupancy grid for the geographical area, the aggregated occupancy grid based on the second signaling.

In some examples of the method, apparatuses, and non-transitory computer-readable medium described herein, the geographical area includes a first geographical area and the method, apparatuses, and non-transitory computer-readable medium may include further operations, features, means, or instructions for determining a second geographical area based on a range associated with the one or more sensors, where transmitting the second signaling may be based on the second geographical area being within at least a portion of the first geographical area.

In some examples of the method, apparatuses, and non-transitory computer-readable medium described herein, receiving the control information may include operations, features, means, or instructions for receiving an indication of the geographical area, a cell shape, a cell size, or a combination thereof.

Some examples of the method, apparatuses, and non-transitory computer-readable medium described herein may further include operations, features, means, or instructions for receiving an indication of a table that includes a set of multiple indices, each index of the set of multiple indices corresponding to one or more of the geographical area, the cell shape, or the cell size, where the indication of the geographical area, the cell shape, the cell size, or a combination thereof includes an index of the set of multiple indices.

In some examples of the method, apparatuses, and non-transitory computer-readable medium described herein, the control information indicating the occupancy grid may be received according to a periodicity.

Some examples of the method, apparatuses, and non-transitory computer-readable medium described herein may further include operations, features, means, or instructions for transmitting a request message for the control information indicating the occupancy grid, where receiving the control information indicating the occupancy grid may be based on transmitting the request message.

Some examples of the method, apparatuses, and non-transitory computer-readable medium described herein may further include operations, features, means, or instructions for operating in accordance to a configuration associated with the occupancy grid until an indication of a second occupancy grid may be received.

Some examples of the method, apparatuses, and non-transitory computer-readable medium described herein may further include operations, features, means, or instructions for incrementing a counter based on transmitting the second signaling and operating in accordance to a configuration associated with the occupancy grid until a value of the counter satisfies a threshold.

In some examples of the method, apparatuses, and non-transitory computer-readable medium described herein, receiving the control information indicating the occupancy grid may include operations, features, means, or instructions for receiving an indication of a mapping between the set of multiple cells and the set of multiple REs, where the mapping may be a one-to-one mapping between the set of multiple cells and the set of multiple REs.

Some examples of the method, apparatuses, and non-transitory computer-readable medium described herein may further include operations, features, means, or instructions for receiving a downlink control information (DCI) message indicating a slot for the UE to use to transmit the second signaling, the slot utilized by a set of multiple UEs to transmit on REs of the set of multiple REs that correspond to cells of the set of multiple cells of the geographical area that UEs of the set of multiple UEs determine may be occupied.

Some examples of the method, apparatuses, and non-transitory computer-readable medium described herein may further include operations, features, means, or instructions for receiving control signaling indicating a periodic set of slots for the UE to use to transmit the second signaling, each slot of the periodic set of slots utilized by a set of multiple UEs to transmit on REs of the set of multiple REs that correspond to cells of the set of multiple cells of the geographical area that UEs of the set of multiple UEs determine may be occupied.

Some examples of the method, apparatuses, and non-transitory computer-readable medium described herein may further include operations, features, means, or instructions for refraining from transmitting via one or more REs of the set of multiple REs that correspond to one or more second cells of the set of multiple cells that may be indicated as unoccupied according to the occupancy information.

A method for wireless communication at a network entity is described. The method may include transmitting control information indicating an occupancy grid including a set of multiple cells corresponding to a geographical area, cells of the set of multiple cells corresponding to REs of a set of multiple REs of a time-frequency resource grid, receiving signaling via a set of REs of the set of multiple REs, and generating an aggregated occupancy grid for the geographical area based on determining, for each RE of the set of REs, that a cell of the set of multiple cells corresponding to a RE is occupied or unoccupied based on an energy received via the RE and an energy threshold.

An apparatus for wireless communication at a network entity is described. The apparatus may include a processor, memory coupled with the processor, and instructions stored in the memory. The instructions may be executable by the processor to cause the apparatus to transmit control information indicating an occupancy grid including a set of multiple cells corresponding to a geographical area, cells of the set of multiple cells corresponding to REs of a set of multiple REs of a time-frequency resource grid, receive signaling via a set of REs of the set of multiple REs, and generate an aggregated occupancy grid for the geographical area based on determining, for each RE of the set of REs, that a cell of the set of multiple cells corresponding to a RE is occupied or unoccupied based on an energy received via the RE and an energy threshold.

Another apparatus for wireless communication at a network entity is described. The apparatus may include means for transmitting control information indicating an occupancy grid including a set of multiple cells corresponding to a geographical area, cells of the set of multiple cells corresponding to REs of a set of multiple REs of a time-frequency resource grid, means for receiving signaling via a set of REs of the set of multiple REs, and means for generating an aggregated occupancy grid for the geographical area based on determining, for each RE of the set of REs, that a cell of the set of multiple cells corresponding to a RE is occupied or unoccupied based on an energy received via the RE and an energy threshold.

A non-transitory computer-readable medium storing code for wireless communication at a network entity is described. The code may include instructions executable by a processor to transmit control information indicating an occupancy grid including a set of multiple cells corresponding to a geographical area, cells of the set of multiple cells corresponding to REs of a set of multiple REs of a time-frequency resource grid, receive signaling via a set of REs of the set of multiple REs, and generate an aggregated occupancy grid for the geographical area based on determining, for each RE of the set of REs, that a cell of the set of multiple cells corresponding to a RE is occupied or unoccupied based on an energy received via the RE and an energy threshold.

In some examples of the method, apparatuses, and non-transitory computer-readable medium described herein, determining that the cell may be occupied may include operations, features, means, or instructions for determining that the cell may be occupied based on the energy of the RE corresponding to the cell satisfying the energy threshold.

Some examples of the method, apparatuses, and non-transitory computer-readable medium described herein may further include operations, features, means, or instructions for determining that the cell may be unoccupied based on the energy of the RE corresponding to the cell being below the energy threshold.

Some examples of the method, apparatuses, and non-transitory computer-readable medium described herein may further include operations, features, means, or instructions for transmitting, based on generating the aggregated occupancy grid, third signaling indicating the aggregated occupancy grid.

In some examples of the method, apparatuses, and non-transitory computer-readable medium described herein, transmitting the control information may include operations, features, means, or instructions for transmitting an indication of the geographical area, a cell shape, a cell size, or a combination thereof.

Some examples of the method, apparatuses, and non-transitory computer-readable medium described herein may further include operations, features, means, or instructions for transmitting an indication of a table that includes a set of multiple indices, each index of the set of multiple indices corresponding to one or more of the geographical area, the cell shape, or the cell size, where the indication of the geographical area, the cell shape, the cell size, or a combination thereof includes an index of the set of multiple indices.

In some examples of the method, apparatuses, and non-transitory computer-readable medium described herein, the control information may be transmitted according to a periodicity.

Some examples of the method, apparatuses, and non-transitory computer-readable medium described herein may further include operations, features, means, or instructions for receiving a request message for the control information indicating the occupancy grid, where transmitting the control information indicating the occupancy grid may be based on receiving the request message.

In some examples of the method, apparatuses, and non-transitory computer-readable medium described herein, transmitting the control information may include operations, features, means, or instructions for transmitting a first configuration associated with generating the aggregated occupancy grid, the method further including transmitting second control information indicating a second configuration associated with generating the aggregated occupancy grid and switching, based on transmitting the second control information, from operating according to the first configuration to operating according to the second configuration.

In some examples of the method, apparatuses, and non-transitory computer-readable medium described herein, transmitting the control information may include operations, features, means, or instructions for transmitting a first configuration associated with generating the aggregated occupancy grid, the method further including incrementing a counter based on generating the aggregated occupancy grid and transmitting second control information indicating a second configuration associated with generating the aggregated occupancy grid based on a value of the counter satisfying a threshold.

In some examples of the method, apparatuses, and non-transitory computer-readable medium described herein, transmitting the control information may include operations, features, means, or instructions for transmitting an indication of a mapping between the set of multiple cells and the set of multiple REs, where the mapping may be a one-to-one mapping between the set of multiple cells and the set of multiple REs.

Some examples of the method, apparatuses, and non-transitory computer-readable medium described herein may further include operations, features, means, or instructions for transmitting, to a UE, a DCI message indicating a slot for the UE to use to transmit the signaling via the set of REs.

Some examples of the method, apparatuses, and non-transitory computer-readable medium described herein may further include operations, features, means, or instructions for transmitting, to a UE, control signaling indicating a periodic set of slots for the UE to use to transmit the signaling via the set of REs.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, radio frequency (RF)-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

### BRIEF DESCRIPTION OF THE DRAWINGS

FIG. 1 illustrates an example of a wireless communications system that supports dynamic aggregated occupancy grid generation in accordance with one or more aspects of the present disclosure.
FIG. 2 illustrates an example of a network architecture that supports dynamic aggregated occupancy grid generation in accordance with one or more aspects of the present disclosure.
FIG. 3 illustrates an example of a wireless communications system that supports dynamic aggregated occupancy grid generation in accordance with one or more aspects of the present disclosure.
FIGs. 4 and 5 illustrate examples of a occupancy grid generation scheme that supports dynamic aggregated occupancy grid generation in accordance with one or more aspects of the present disclosure.
FIG. 6 illustrates an example of a process flow that supports dynamic aggregated occupancy grid generation in accordance with one or more aspects of the present disclosure.
FIGs. 7 and 8 show block diagrams of devices that support dynamic aggregated occupancy grid generation in accordance with one or more aspects of the present disclosure.
FIG. 9 shows a block diagram of a communications manager that supports dynamic aggregated occupancy grid generation in accordance with one or more aspects of the present disclosure.
FIG. 10 shows a diagram of a system including a device that supports dynamic aggregated occupancy grid generation in accordance with one or more aspects of the present disclosure.
FIGs. 11 and 12 show block diagrams of devices that support dynamic aggregated occupancy grid generation in accordance with one or more aspects of the present disclosure.
FIG. 13 shows a block diagram of a communications manager that supports dynamic aggregated occupancy grid generation in accordance with one or more aspects of the present disclosure.
FIG. 14 shows a diagram of a system including a device that supports dynamic aggregated occupancy grid generation in accordance with one or more aspects of the present disclosure.
FIGs. 15 through 19 show flowcharts illustrating methods that support dynamic aggregated occupancy grid generation in accordance with one or more aspects of the present disclosure.

### DETAILED DESCRIPTION

In some examples, high definition (HD) maps may be beneficial for automotive applications such as advanced driver assistance systems (ADAS) and positioning. To generate an HD map, a network entity may aggregate occupancy grids from multiple user equipment (UEs). In some examples, a UE may generate an occupancy map using one or more sensors. First, the UE may determine a geographical area based on a range of the one or more sensors and divide the geographical area into cells. The UE may then determine whether each cell of the geographical area is occupied or unoccupied and transmit this information to the network entity in the form of an occupancy map. Upon receiving the occupancy maps from the multiple UEs, the network entity may combine the occupancy grids to determine the HD map. For stationary objects, the multiple UEs may not sense and send their occupancy grid during a same time interval allowing the network to control the communication overhead associated with transmitting the occupancy grids. However, for dynamic objects, the multiple UEs may sense and send their occupancy grid during a same time interval which may increase communication overhead associated with transmitting the occupancy grids. As such, an efficient procedure for generating cooperative dynamic occupancy grids for multiple UEs with a potentially high update rate may be beneficial.

As described herein, a network entity may generate an HD map by combining occupancy grids from multiple UEs using over-the-air (OTA) aggregation, where the generated HD map may also be referred to as an aggregated occupancy grid. In some examples, a set of UEs may receive a configuration message from the network entity. The configuration message may include an indication of a global geographical area of the HD map and a shape or size of the cells included in the global geographical area. In addition, the configuration message may include a cell-to-RE mapping. The set of UEs may determine that their geographical area is included within the global geographical area and divide their geographical area into cells according to the indicated cell size or cell shape.

The set of UEs may then determine whether the cells of their geographical are occupied (e.g., using sensors). If a cell is determined to be occupied, a UE may transmit signaling over an RE mapped to the cell. If the cell is determined not to be occupied, the UE may not transmit (i.e., refrain from) signaling over the RE mapped to the cell. Because cells of the set of UEs may overlap, such as when multiple UEs detect occupancy at a same geographical location, multiple UEs may transmit signaling on a same RE. As such, the network entity may determine whether a cell is occupied based on an energy of the RE corresponding to the cell (e.g., OTA aggregation). If the energy of the RE corresponding to the cell is above a threshold, the network entity may determine that the cell is occupied, whereas if the energy of the RE corresponding to the cell is below the threshold, the network entity may determine the cell is not occupied. The network entity may generate the HD map (or aggregated occupancy grid) based on determining whether the cells are occupied. By exploiting OTA aggregation, the resources for transmitting occupancy grid may become independent from the number of UE included in the set of UEs which may decrease overhead signaling.

Aspects of the disclosure are initially described in the context of wireless communications systems. Additional aspects are described in the context of occupancy grid generation schemes and a process flow. Aspects of the disclosure are further illustrated by and described with reference to apparatus diagrams, system diagrams, and flowcharts that relate to dynamic aggregated occupancy grid generation.

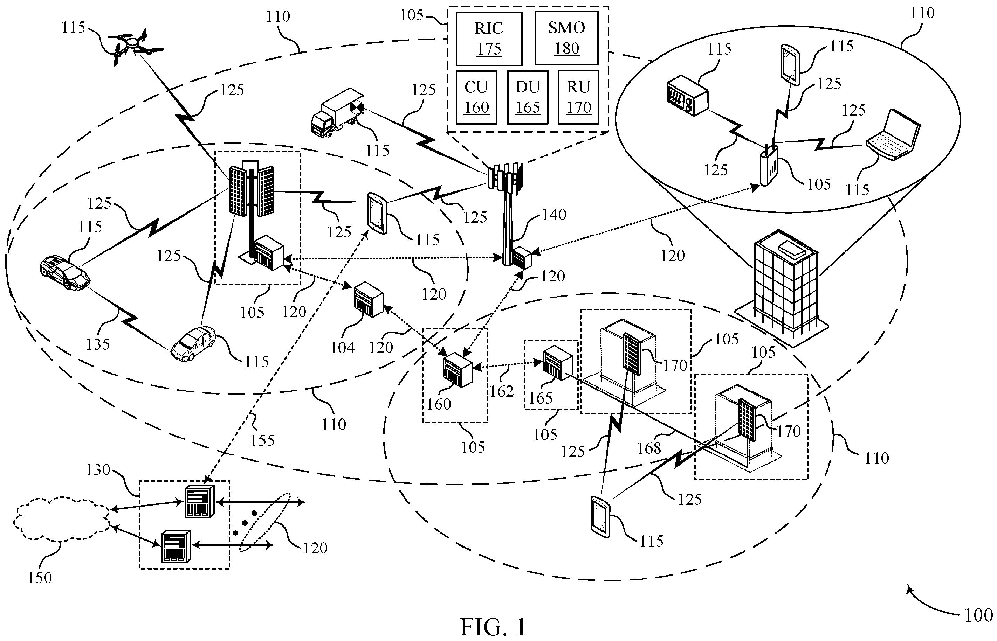

**FIG. 1** illustrates an example of a wireless communications system 100 that supports dynamic aggregated occupancy grid generation in accordance with one or more aspects of the present disclosure. The wireless communications system 100 may include one or more network entities 105, one or more UEs 115, and a core network 130. In some examples, the wireless communications system 100 may be a Long Term Evolution (LTE) network, an LTE-Advanced (LTE-A) network, an LTE-A Pro network, a New Radio (NR) network, or a network operating in accordance with other systems and radio technologies, including future systems and radio technologies not explicitly mentioned herein.

The network entities 105 may be dispersed throughout a geographic area to form the wireless communications system 100 and may include devices in different forms or having different capabilities. In various examples, a network entity 105 may be referred to as a network element, a mobility element, a radio access network (RAN) node, or network equipment, among other nomenclature. In some examples, network entities 105 and UEs 115 may wirelessly communicate via one or more communication links 125 (e.g., a radio frequency (RF) access link). For example, a network entity 105 may support a coverage area 110 (e.g., a geographic coverage area) over which the UEs 115 and the network entity 105 may establish one or more communication links 125. The coverage area 110 may be an example of a geographic area over which a network entity 105 and a UE 115 may support the communication of signals according to one or more radio access technologies (RATs).

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be capable of supporting communications with various types of devices, such as other UEs 115 or network entities 105, as shown in FIG. 1.

As described herein, a node of the wireless communications system 100, which may be referred to as a network node, or a wireless node, may be a network entity 105 (e.g., any network entity described herein), a UE 115 (e.g., any UE described herein), a network controller, an apparatus, a device, a computing system, one or more components, or another suitable processing entity configured to perform any of the techniques described herein. For example, a node may be a UE 115. As another example, a node may be a network entity 105. As another example, a first node may be configured to communicate with a second node or a third node. In one aspect of this example, the first node may be a UE 115, the second node may be a network entity 105, and the third node may be a UE 115. In another aspect of this example, the first node may be a UE 115, the second node may be a network entity 105, and the third node may be a network entity 105. In yet other aspects of this example, the first, second, and third nodes may be different relative to these examples. Similarly, reference to a UE 115, network entity 105, apparatus, device, computing system, or the like may include disclosure of the UE 115, network entity 105, apparatus, device, computing system, or the like being a node. For example, disclosure that a UE 115 is configured to receive information from a network entity 105 also discloses that a first node is configured to receive information from a second node.

In some examples, network entities 105 may communicate with the core network 130, or with one another, or both. For example, network entities 105 may communicate with the core network 130 via one or more backhaul communication links 120 (e.g., in accordance with an S1, N2, N3, or other interface protocol). In some examples, network entities 105 may communicate with one another via a backhaul communication link 120 (e.g., in accordance with an X2, Xn, or other interface protocol) either directly (e.g., directly between network entities 105) or indirectly (e.g., via a core network 130). In some examples, network entities 105 may communicate with one another via a midhaul communication link 162 (e.g., in accordance with a midhaul interface protocol) or a fronthaul communication link 168 (e.g., in accordance with a fronthaul interface protocol), or any combination thereof. The backhaul communication links 120, midhaul communication links 162, or fronthaul communication links 168 may be or include one or more wired links (e.g., an electrical link, an optical fiber link), one or more wireless links (e.g., a radio link, a wireless optical link), among other examples or various combinations thereof. A UE 115 may communicate with the core network 130 via a communication link 155.

One or more of the network entities 105 described herein may include or may be referred to as a base station 140 (e.g., a base transceiver station, a radio base station, an NR base station, an access point, a radio transceiver, a NodeB, an eNodeB (eNB), a next-generation NodeB or a giga-NodeB (either of which may be referred to as a gNB), a 5G NB, a next-generation eNB (ng-eNB), a Home NodeB, a Home eNodeB, or other suitable terminology). In some examples, a network entity 105 (e.g., a base station 140) may be implemented in an aggregated (e.g., monolithic, standalone) base station architecture, which may be configured to utilize a protocol stack that is physically or logically integrated within a single network entity 105 (e.g., a single RAN node, such as a base station 140).

In some examples, a network entity 105 may be implemented in a disaggregated architecture (e.g., a disaggregated base station architecture, a disaggregated RAN architecture), which may be configured to utilize a protocol stack that is physically or logically distributed among two or more network entities 105, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 105 may include one or more of a central unit (CU) 160, a distributed unit (DU) 165, a radio unit (RU) 170, a RAN Intelligent Controller (RIC) 175 (e.g., a Near-Real Time RIC (Near-RT RIC), a Non-Real Time RIC (Non-RT RIC)), a Service Management and Orchestration (SMO) 180 system, or any combination thereof. An RU 170 may also be referred to as a radio head, a smart radio head, a remote radio head (RRH), a remote radio unit (RRU), or a transmission reception point (TRP). One or more components of the network entities 105 in a disaggregated RAN architecture may be co-located, or one or more components of the network entities 105 may be located in distributed locations (e.g., separate physical locations). In some examples, one or more network entities 105 of a disaggregated RAN architecture may be implemented as virtual units (e.g., a virtual CU (VCU), a virtual DU (VDU), a virtual RU (VRU)).

The split of functionality between a CU 160, a DU 165, and an RU 170 is flexible and may support different functionalities depending on which functions (e.g., network layer functions, protocol layer functions, baseband functions, RF functions, and any combinations thereof) are performed at a CU 160, a DU 165, or an RU 170. For example, a functional split of a protocol stack may be employed between a CU 160 and a DU 165 such that the CU 160 may support one or more layers of the protocol stack and the DU 165 may support one or more different layers of the protocol stack. In some examples, the CU 160 may host upper protocol layer (e.g., layer 3 (L3), layer 2 (L2)) functionality and signaling (e.g., Radio Resource Control (RRC), service data adaption protocol (SDAP), Packet Data Convergence Protocol (PDCP)). The CU 160 may be connected to one or more DUs 165 or RUs 170, and the one or more DUs 165 or RUs 170 may host lower protocol layers, such as layer 1 (L1) (e.g., physical (PHY) layer) or L2 (e.g., radio link control (RLC) layer, medium access control (MAC) layer) functionality and signaling, and may each be at least partially controlled by the CU 160. Additionally, or alternatively, a functional split of the protocol stack may be employed between a DU 165 and an RU 170 such that the DU 165 may support one or more layers of the protocol stack and the RU 170 may support one or more different layers of the protocol stack. The DU 165 may support one or multiple different cells (e.g., via one or more RUs 170). In some cases, a functional split between a CU 160 and a DU 165, or between a DU 165 and an RU 170 may be within a protocol layer (e.g., some functions for a protocol layer may be performed by one of a CU 160, a DU 165, or an RU 170, while other functions of the protocol layer are performed by a different one of the CU 160, the DU 165, or the RU 170). A CU 160 may be functionally split further into CU control plane (CU-CP) and CU user plane (CU-UP) functions. A CU 160 may be connected to one or more DUs 165 via a midhaul communication link 162 (e.g., F1, F1-c, F1-u), and a DU 165 may be connected to one or more RUs 170 via a fronthaul communication link 168 (e.g., open fronthaul (FH) interface). In some examples, a midhaul communication link 162 or a fronthaul communication link 168 may be implemented in accordance with an interface (e.g., a channel) between layers of a protocol stack supported by respective network entities 105 that are in communication via such communication links.

In wireless communications systems (e.g., wireless communications system 100), infrastructure and spectral resources for radio access may support wireless backhaul link capabilities to supplement wired backhaul connections, providing an IAB network architecture (e.g., to a core network 130). In some cases, in an IAB network, one or more network entities 105 (e.g., IAB nodes 104) may be partially controlled by each other. One or more IAB nodes 104 may be referred to as a donor entity or an IAB donor. One or more DUs 165 or one or more RUs 170 may be partially controlled by one or more CUs 160 associated with a donor network entity 105 (e.g., a donor base station 140). The one or more donor network entities 105 (e.g., IAB donors) may be in communication with one or more additional network entities 105 (e.g., IAB nodes 104) via supported access and backhaul links (e.g., backhaul communication links 120). IAB nodes 104 may include an IAB mobile termination (IAB-MT) controlled (e.g., scheduled) by DUs 165 of a coupled IAB donor. An IAB-MT may include an independent set of antennas for relay of communications with UEs 115, or may share the same antennas (e.g., of an RU 170) of an IAB node 104 used for access via the DU 165 of the IAB node 104 (e.g., referred to as virtual IAB-MT (vIAB-MT)). In some examples, the IAB nodes 104 may include DUs 165 that support communication links with additional entities (e.g., IAB nodes 104, UEs 115) within the relay chain or configuration of the access network (e.g., downstream). In such cases, one or more components of the disaggregated RAN architecture (e.g., one or more IAB nodes 104 or components of IAB nodes 104) may be configured to operate according to the techniques described herein.

In the case of the techniques described herein applied in the context of a disaggregated RAN architecture, one or more components of the disaggregated RAN architecture may be configured to support dynamic aggregated occupancy grid generation as described herein. For example, some operations described as being performed by a UE 115 or a network entity 105 (e.g., a base station 140) may additionally, or alternatively, be performed by one or more components of the disaggregated RAN architecture (e.g., IAB nodes 104, DUs 165, CUs 160, RUs 170, RIC 175, SMO 180).

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (ToT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the network entities 105 and the network equipment including macro eNBs or gNBs, small cell eNBs or gNBs, or relay base stations, among other examples, as shown in FIG. 1.

The UEs 115 and the network entities 105 may wirelessly communicate with one another via one or more communication links 125 (e.g., an access link) using resources associated with one or more carriers. The term "carrier" may refer to a set of RF spectrum resources having a defined physical layer structure for supporting the communication links 125. For example, a carrier used for a communication link 125 may include a portion of a RF spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers. Communication between a network entity 105 and other devices may refer to communication between the devices and any portion (e.g., entity, subentity) of a network entity 105. For example, the terms "transmitting," "receiving," or "communicating," when referring to a network entity 105, may refer to any portion of a network entity 105 (e.g., a base station 140, a CU 160, a DU 165, a RU 170) of a RAN communicating with another device (e.g., directly or via one or more other network entities 105).

Signal waveforms transmitted via a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, an RE may refer to resources of one symbol period (e.g., a duration of one modulation symbol) and one subcarrier, in which case the symbol period and subcarrier spacing may be inversely related. The quantity of bits carried by each RE may depend on the modulation scheme (e.g., the order of the modulation scheme, the coding rate of the modulation scheme, or both), such that a relatively higher quantity of REs (e.g., in a transmission duration) and a relatively higher order of a modulation scheme may correspond to a relatively higher rate of communication. A wireless communications resource may refer to a combination of an RF spectrum resource, a time resource, and a spatial resource (e.g., a spatial layer, a beam), and the use of multiple spatial resources may increase the data rate or data integrity for communications with a UE 115.

The time intervals for the network entities 105 or the UEs 115 may be expressed in multiples of a basic time unit which may, for example, refer to a sampling period of *Tₛ* = 1/(Δ*fₘₐₓ* · *N_{f}*) seconds, for which Δ*fₘₐₓ* may represent a supported subcarrier spacing, and *N_{f}* may represent a supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively-numbered subframes or slots, and each subframe or slot may have the same duration. In some examples, a frame may be divided (e.g., in the time domain) into subframes, and each subframe may be further divided into a quantity of slots. Alternatively, each frame may include a variable quantity of slots, and the quantity of slots may depend on subcarrier spacing. Each slot may include a quantity of symbol periods (e.g., depending on the length of the cyclic prefix prepended to each symbol period). In some wireless communications systems 100, a slot may further be divided into multiple mini-slots associated with one or more symbols. Excluding the cyclic prefix, each symbol period may be associated with one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., a quantity of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed for communication using a carrier according to various techniques. A physical control channel and a physical data channel may be multiplexed for signaling via a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a set of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to an amount of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a network entity 105 (e.g., a base station 140, an RU 170) may be movable and therefore provide communication coverage for a moving coverage area 110. In some examples, different coverage areas 110 associated with different technologies may overlap, but the different coverage areas 110 may be supported by the same network entity 105. In some other examples, the overlapping coverage areas 110 associated with different technologies may be supported by different network entities 105. The wireless communications system 100 may include, for example, a heterogeneous network in which different types of the network entities 105 provide coverage for various coverage areas 110 using the same or different radio access technologies.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a network entity 105 (e.g., a base station 140) without human intervention. In some examples, M2M communication or MTC may include communications from devices that integrate sensors or meters to measure or capture information and relay such information to a central server or application program that uses the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may be configured to support communicating directly with other UEs 115 via a device-to-device (D2D) communication link 135 (e.g., in accordance with a peer-to-peer (P2P), D2D, or sidelink protocol). In some examples, one or more UEs 115 of a group that are performing D2D communications may be within the coverage area 110 of a network entity 105 (e.g., a base station 140, an RU 170), which may support aspects of such D2D communications being configured by (e.g., scheduled by) the network entity 105. In some examples, one or more UEs 115 of such a group may be outside the coverage area 110 of a network entity 105 or may be otherwise unable to or not configured to receive transmissions from a network entity 105. In some examples, groups of the UEs 115 communicating via D2D communications may support a one-to-many (1:M) system in which each UE 115 transmits to each of the other UEs 115 in the group. In some examples, a network entity 105 may facilitate the scheduling of resources for D2D communications. In some other examples, D2D communications may be carried out between the UEs 115 without an involvement of a network entity 105.

In some systems, a D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., network entities 105, base stations 140, RUs 170) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the network entities 105 (e.g., base stations 140) associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

The wireless communications system 100 may operate using one or more frequency bands, which may be in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. UHF waves may be blocked or redirected by buildings and environmental features, which may be referred to as clusters, but the waves may penetrate structures sufficiently for a macro cell to provide service to the UEs 115 located indoors. Communications using UHF waves may be associated with smaller antennas and shorter ranges (e.g., less than 100 kilometers) compared to communications using the smaller frequencies and longer waves of the high frequency (HF) or very high frequency (VHF) portion of the spectrum below 300 MHz.

The wireless communications system 100 may utilize both licensed and unlicensed RF spectrum bands. For example, the wireless communications system 100 may employ License Assisted Access (LAA), LTE-Unlicensed (LTE-U) radio access technology, or NR technology using an unlicensed band such as the 5 GHz industrial, scientific, and medical (ISM) band. While operating using unlicensed RF spectrum bands, devices such as the network entities 105 and the UEs 115 may employ carrier sensing for collision detection and avoidance. In some examples, operations using unlicensed bands may be based on a carrier aggregation configuration in conjunction with component carriers operating using a licensed band (e.g., LAA). Operations using unlicensed spectrum may include downlink transmissions, uplink transmissions, P2P transmissions, or D2D transmissions, among other examples.

A network entity 105 (e.g., a base station 140, an RU 170) or a UE 115 may be equipped with multiple antennas, which may be used to employ techniques such as transmit diversity, receive diversity, multiple-input multiple-output (MIMO) communications, or beamforming. The antennas of a network entity 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a network entity 105 may be located at diverse geographic locations. A network entity 105 may include an antenna array with a set of rows and columns of antenna ports that the network entity 105 may use to support beamforming of communications with a UE 115. Likewise, a UE 115 may include one or more antenna arrays that may support various MIMO or beamforming operations. Additionally, or alternatively, an antenna panel may support RF beamforming for a signal transmitted via an antenna port.

Beamforming, which may also be referred to as spatial filtering, directional transmission, or directional reception, is a signal processing technique that may be used at a transmitting device or a receiving device (e.g., a network entity 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating along particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or PDCP layer may be IP-based. An RLC layer may perform packet segmentation and reassembly to communicate via logical channels. A MAC layer may perform priority handling and multiplexing of logical channels into transport channels. The MAC layer also may implement error detection techniques, error correction techniques, or both to support retransmissions to improve link efficiency. In the control plane, an RRC layer may provide establishment, configuration, and maintenance of an RRC connection between a UE 115 and a network entity 105 or a core network 130 supporting radio bearers for user plane data. A PHY layer may map transport channels to physical channels.

In some examples, the network entity 105 may generate an HD map by combining occupancy grids from multiple UEs 115 using OTA aggregation, where the generated HD map may also be referred to as an aggregated occupancy grid. In some examples, a set of UEs 115 may receive a configuration message from the network entity 105. The configuration message may include an indication of a global geographical area of the HD map and a shape or size of the cells included in the global geographical area. In addition, the configuration message may include a cell-to-RE mapping. The set of UEs 115 may determine that their geographical area is included within the global geographical area and divide their geographical area into cells according to the indicated cell size or cell shape.

The set of UEs 115 may then determine whether the cells of their geographical are occupied (e.g., using sensors). If a cell is determined to be occupied, a UE 115 may transmit signaling over an RE mapped to the cell. If the cell is determined not to be occupied, the UE 115 may not transmit (i.e., refrain from) signaling over the RE mapped to the cell. Because cells of the set of UEs may overlap, such as when multiple UEs detect occupancy at a same geographical location, multiple UEs 115 may transmit signaling on a same RE. As such, the network entity 105 may determine whether a cell is occupied based on an energy of the RE corresponding to the cell (e.g., OTA aggregation). If the energy of the RE corresponding to the cell is above a threshold, the network entity 105 may determine that the cell is occupied, whereas if the energy of the RE corresponding to the cell is below the threshold, the network entity 105 may determine the cell is not occupied. The network entity 105 may generate the HD map (or aggregated occupancy grid) based on determining whether the cells are occupied. By exploiting OTA aggregation, the resources for transmitting occupancy grid may become independent from the number of UE 115 included in the set of UEs 115 which may decrease overhead signaling.

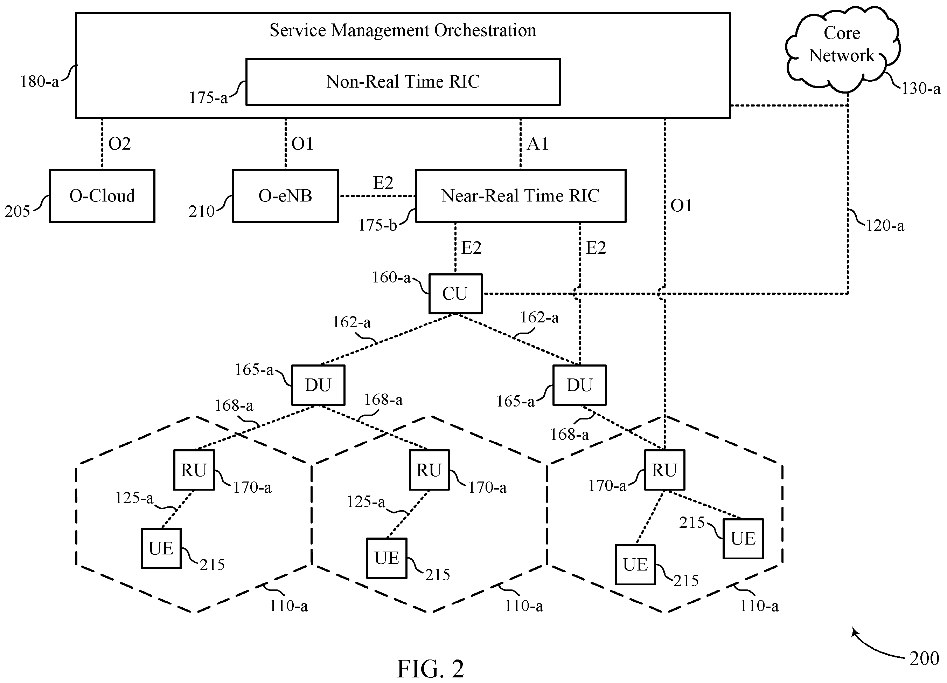

**FIG. 2** illustrates an example of a network architecture 200 (e.g., a disaggregated base station architecture, a disaggregated RAN architecture) that supports dynamic aggregated occupancy grid generation in accordance with one or more aspects of the present disclosure. The network architecture 200 may illustrate an example for implementing one or more aspects of the wireless communications system 100. The network architecture 200 may include one or more CUs 160-a that may communicate directly with a core network 130-a via a backhaul communication link 120-a, or indirectly with the core network 130-a through one or more disaggregated network entities 105 (e.g., a Near-RT RIC 175-b via an E2 link, or a Non-RT RIC 175-a associated with an SMO 180-a (e.g., an SMO Framework), or both). A CU 160-a may communicate with one or more DUs 165-a via respective midhaul communication links 162-a (e.g., an F1 interface). The DUs 165-a may communicate with one or more RUs 170-a via respective fronthaul communication links 168-a. The RUs 170-a may be associated with respective coverage areas 110-a and may communicate with UEs 215 via one or more communication links 125-a. In some implementations, a UE 215 may be simultaneously served by multiple RUs 170-a.

Each of the network entities 105 of the network architecture 200 (e.g., CUs 160-a, DUs 165-a, RUs 170-a, Non-RT RICs 175-a, Near-RT RICs 175-b, SMOs 180-a, Open Clouds (O-Clouds) 205, Open eNBs (O-eNBs) 210) may include one or more interfaces or may be coupled with one or more interfaces configured to receive or transmit signals (e.g., data, information) via a wired or wireless transmission medium. Each network entity 105, or an associated processor (e.g., controller) providing instructions to an interface of the network entity 105, may be configured to communicate with one or more of the other network entities 105 via the transmission medium. For example, the network entities 105 may include a wired interface configured to receive or transmit signals over a wired transmission medium to one or more of the other network entities 105. Additionally, or alternatively, the network entities 105 may include a wireless interface, which may include a receiver, a transmitter, or transceiver (e.g., an RF transceiver) configured to receive or transmit signals, or both, over a wireless transmission medium to one or more of the other network entities 105.

In some examples, a CU 160-a may host one or more higher layer control functions. Such control functions may include RRC, PDCP, SDAP, or the like. Each control function may be implemented with an interface configured to communicate signals with other control functions hosted by the CU 160-a. A CU 160-a may be configured to handle user plane functionality (e.g., CU-UP), control plane functionality (e.g., CU-CP), or a combination thereof. In some examples, a CU 160-a may be logically split into one or more CU-UP units and one or more CU-CP units. A CU-UP unit may communicate bidirectionally with the CU-CP unit via an interface, such as an E1 interface when implemented in an O-RAN configuration. A CU 160-a may be implemented to communicate with a DU 165-a, as necessary, for network control and signaling.

A DU 165-a may correspond to a logical unit that includes one or more functions (e.g., base station functions, RAN functions) to control the operation of one or more RUs 170-a. In some examples, a DU 165-a may host, at least partially, one or more of an RLC layer, a MAC layer, and one or more aspects of a PHY layer (e.g., a high PHY layer, such as modules for FEC encoding and decoding, scrambling, modulation and demodulation, or the like) depending, at least in part, on a functional split, such as those defined by the 3rd Generation Partnership Project (3GPP). In some examples, a DU 165-a may further host one or more low PHY layers. Each layer may be implemented with an interface configured to communicate signals with other layers hosted by the DU 165-a, or with control functions hosted by a CU 160-a.

In some examples, lower-layer functionality may be implemented by one or more RUs 170-a. For example, an RU 170-a, controlled by a DU 165-a, may correspond to a logical node that hosts RF processing functions, or low-PHY layer functions (e.g., performing fast Fourier transform (FFT), inverse FFT (iFFT), digital beamforming, physical random access channel (PRACH) extraction and filtering, or the like), or both, based at least in part on the functional split, such as a lower-layer functional split. In such an architecture, an RU 170-a may be implemented to handle over the air (OTA) communication with one or more UEs 215. In some implementations, real-time and non-real-time aspects of control and user plane communication with the RU(s) 170-a may be controlled by the corresponding DU 165-a. In some examples, such a configuration may enable a DU 165-a and a CU 160-a to be implemented in a cloud-based RAN architecture, such as a vRAN architecture.

The SMO 180-a may be configured to support RAN deployment and provisioning of non-virtualized and virtualized network entities 105. For non-virtualized network entities 105, the SMO 180-a may be configured to support the deployment of dedicated physical resources for RAN coverage requirements which may be managed via an operations and maintenance interface (e.g., an O1 interface). For virtualized network entities 105, the SMO 180-a may be configured to interact with a cloud computing platform (e.g., an O-Cloud 205) to perform network entity life cycle management (e.g., to instantiate virtualized network entities 105) via a cloud computing platform interface (e.g., an O2 interface). Such virtualized network entities 105 can include, but are not limited to, CUs 160-a, DUs 165-a, RUs 170-a, and Near-RT RICs 175-b. In some implementations, the SMO 180-a may communicate with components configured in accordance with a 4G RAN (e.g., via an O1 interface). Additionally, or alternatively, in some implementations, the SMO 180-a may communicate directly with one or more RUs 170-a via an O1 interface. The SMO 180-a also may include a Non-RT RIC 175-a configured to support functionality of the SMO 180-a.

The Non-RT RIC 175-a may be configured to include a logical function that enables non-real-time control and optimization of RAN elements and resources, Artificial Intelligence (AI) or Machine Learning (ML) workflows including model training and updates, or policy-based guidance of applications/features in the Near-RT RIC 175-b. The Non-RT RIC 175-a may be coupled to or communicate with (e.g., via an A1 interface) the Near-RT RIC 175-b. The Near-RT RIC 175-b may be configured to include a logical function that enables near-real-time control and optimization of RAN elements and resources via data collection and actions over an interface (e.g., via an E2 interface) connecting one or more CUs 160-a, one or more DUs 165-a, or both, as well as an O-eNB 210, with the Near-RT RIC 175-b.

In some examples, to generate AI/ML models to be deployed in the Near-RT RIC 175-b, the Non-RT RIC 175-a may receive parameters or external enrichment information from external servers. Such information may be utilized by the Near-RT RIC 175-b and may be received at the SMO 180-a or the Non-RT RIC 175-a from non-network data sources or from network functions. In some examples, the Non-RT RIC 175-a or the Near-RT RIC 175-b may be configured to tune RAN behavior or performance. For example, the Non-RT RIC 175-a may monitor long-term trends and patterns for performance and employ AI or ML models to perform corrective actions through the SMO 180-a (e.g., reconfiguration via O1) or via generation of RAN management policies (e.g., A1 policies).

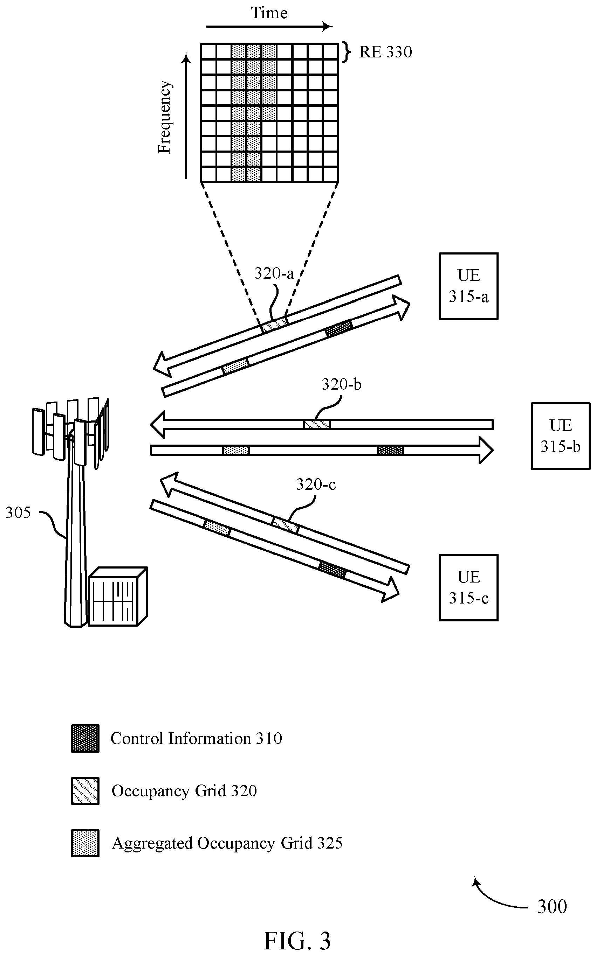

**FIG. 3** illustrates an example of a wireless communications system 300 that supports dynamic aggregated occupancy grid generation in accordance with one or more aspects of the present disclosure. In some examples, the wireless communications system 300 may include aspects of a wireless communications system 100 and a network architecture 200. For example, the wireless communications system 300 may include a network entity 305 which may be an example of a network entity 105 as described with reference to FIG. 1. The wireless communications system 300 may also include UEs 315 which may be examples of UEs 115 and UEs 215 as described with reference to FIGs. 1 and 2. In some examples, the UEs 315 may be example of vehicle UEs (VUEs).

In some examples, a UE 315 may generate an occupancy grid 320. The occupancy grid 320 of the UE 315 may indicate the location of other UEs 315 or objects near or around the UE 315 and may be helpful for automotive operations such as positioning and ADAS. In some examples, the occupancy grid 320 may be associated with a geographical area. The geographical area may represent a range for which the UE 315 may accurately detect the other UEs 315 or objects. In some examples, the UE 315 may include a sensor (e.g., a camera, lidar, or radar) and the geographical area may correspond to a range of the sensor. Moreover, the geographical area may be divided into multiple smaller geographical areas called cells. The cells included in the geographical area may vary in size or shape or have the same size and shape. When generating the occupancy grid 320, the UE 315 may determine the geographical area and the cells that make up the geographical area. The UE 315 may then determine whether each cell is occupied or unoccupied and potentially transmit this occupancy information (e.g., occupancy grid 320) to the network entity 305. A cell may be considered occupied if the UE 315 senses (e.g., using the sensor) that another UE 315 or an object is present in the cell. A cell may be considered unoccupied if the UE 315 does not sense that another UE 315 or an object is present in the cell.

The occupancy grid 320 of the UE 315 may enhance the understanding of the area around the UE 315, but the information provided by the occupancy grid of the UE 315 may be limited. As an example, the occupancy grid 320 of the UE 315 may be limited by the range of the sensor or the field of view of the sensor. For example, the UE 315 may be equipped with a single sensor (e.g., a radar) with a field of view of 20 degrees with respect to the boresight and a range of 150 meters. The resulting occupancy grid 320 for the UE 315 may include the same limitations. In addition, the occupancy grid 320 of the UE 315 may be subject to visibility gaps. For example, another UE 315 may not be visible to the UE 315 even if the other UE 315 is within range of the UE 315 due to occlusions (e.g., buildings). As such, it may be beneficial to fuse occupancy grids 320 generated by each UE 315 in an area (e.g., the UE 315-a, the UE 315-b, and the UE 315-c) and generate an aggregated occupancy grid 325.

To create the aggregated occupancy grid 325, a set of UEs 315 within an area (e.g., the UE 315-a, the UE 315-b, and the UE 315-c) may individually generate their own occupancy grids 320. For example, the UE 315-a may generate an occupancy grid 320-a, the UE 315-b may generate an occupancy grid 320-b, and the UE 315-c may generate an occupancy grid 320-c. Upon generating their own individual occupancy grids 320, the UE 315-a, the UE 315-b, and the UE 315-c may transmit their occupancy grids 320 to the network entity 305 (e.g., a central server) and upon receiving the occupancy grids 320, the network entity 305 may combine the received occupancy grids 320 to generate the aggregated occupancy grid 325. In some examples, the aggregated occupancy grid 325 may indicate the location of stationary objects. In such case, when the UE 315 (e.g., either the UE 315-a, the UE 315-b, or the UE 315-c) passes by an area, the UE 315 transmits its occupancy grid 320 to the network entity 305 for the area and the network entity 305 may accumulate the occupancy grids 320 over time from different UEs 315 and generate an accurate aggregated occupancy grid 325 of the stationary objects in the area. To create such aggregated occupancy grids 325, the UEs 315 may not need to sense or transmit their occupancy grids 320 during a same duration (e.g., at the same time) due to the objects being stationary. This may allow the network entity 305 to control communication overhead associated with transmitting the occupancy grids 320.

However, it may also be helpful for the network entity 305 to track dynamic objects for applications such as ADAS. To create an aggregated occupancy grid for dynamic objects, the UEs 315 may sense and transmit their own individual occupancy grids 320 to the network entity 305 during a same time duration. Additionally, the UEs 315 may transmit their own individual occupancy grids at a high frequency proportional to the dynamics of the environment. Transmitting occupancy grids 320 in such a way may result in a communication overhead that is larger than that of the communication overhead associated with transmitting occupancy grids 320 of stationary objects.

As described herein, a network entity 305 may generate an aggregated occupancy grid 325 for dynamic objects using OTA aggregation. In some examples, the UE 315-a, the UE 315-b, and the UE 315-c may receive (e.g., via broadcast transmission) control information 310. The control information 310 may include a configuration for aggregated occupancy grid generation using OTA aggregation. For example, the control information 310 may include an indication of one or more of a geographical area of the aggregated occupancy grid 325, a size of the cells included in the geographical area of the aggregated occupancy grid 325, or a shape of the cells included in the geographical area of the aggregated occupancy grid 325. Moreover, the control information 310 may indicate mapping between the cells included in the geographical area of the aggregated occupancy grid 325 and REs 330. The mapping may be an example of a one-to-one mapping. That is, a single cell included in the geographical area of the aggregated occupancy grid 325 may be mapped to a single RE. Additionally, the control information 310 may include an indication of one or more slots for transmitting occupancy grids 320.

In some examples, the control information 310 may be transmitted to the UEs 315 according to some periodicity (e.g., configured by the network entity 305). In another example, the control information 310 may be transmitted to the UEs 315 dynamically. That is, it may be up to the network entity 305 to decide when to transmit the control information 310. In yet another example, the control information 310 may be transmitted the UE 315 after a request from one of the UEs 315. For example, the UE 315-a may transmit a request for the control information 310 to the network entity 305 and upon receiving the control information 310, the network entity 305 may transmit the control information 310 to one or more of the UEs 315.

In some examples, the control information 310 or the information included in the control information 310 (e.g., the configuration for occupancy grid generation using OTA aggregation) may be valid for some duration. In one example, the control information 310 at a UE 315 may be valid until the UE 315 receives second control information from the network entity 305 indicating a second configuration for occupancy grid generation using OTA aggregation. In another example, the control information 310 may be valid for a number of aggregation rounds (unless the second control information is received earlier than the number of aggregation is met). In such example, a UE 315 may increment a counter each time it transmits an occupancy grid 320 to the network entity 305 according to the control information 310. If the counter exceeds the number of aggregation rounds (e.g., a threshold), the UE 315 may cease using the control information 310. That is, the UE 315 may stop transmitting (e.g., contributing) its occupancy grid 320 according to the control information 310. In some examples, the network entity 305 may also increment counter for each time it receives the occupancy grid 320 from the UE 315 and if the counter exceeds the number of aggregation rounds (e.g., the threshold), the network entity 305 may transmit second control information to the UE 315 indicating the second configuration for occupancy grid generation using OTA aggregation. Upon receiving the second control information, the UE 315 may switch from transmitting occupancy grids 320 according to the control information 310 to transmitting occupancy grids according to the second control information. In some examples, the threshold number of aggregation rounds may be indicated to the UE 315 via RRC signaling or included in the control information 310.

Upon receiving the control information 310 from the network entity 305, the UEs 315 (e.g., the UE 315-a, the UE 315-b, and the UE 315-c) may determine that the geographical areas of their individual occupancy grids 320 overlaps with at least a portion of the geographical area of the aggregated occupancy grid 325. As one example, the UE 315-a may determine that its corresponding geographical area overlaps with a first set of cells included in the geographical area of the aggregated occupancy grid 325. Additionally, the UE 315-b and the UE 315-c may determine that their corresponding geographical areas overlap with a second set of cells and a third set of cells included in the geographical area of the aggregated occupancy grid 325, respectively.

The UE 315 may then sense, during a same time duration, whether each cell in their respective set of the cells is occupied or not occupied. If the UE 315 determines a cell is occupied, the UE 315 may transmit signaling over an RE 330 corresponding to the cell (e.g., according to the cell-to-RE mapping indicated in the control information 310). In some examples, the signaling may indicate a number greater than or equal to 1 and in some cases, the number may be a complex number. If the UE 315 determines the cells is not occupied, the UE 315 may refrain from transmitting signaling over the RE 330 corresponding to the cell. In some examples, the geographical areas of respective UEs 315 may overlap. For example, a cell included in the geographical area of the aggregated occupancy grid 325 may be included in the first set of cells and the second set of cells. In such example, the UE 315-a and the UE 315-b may transmit signaling over the same RE 330 corresponding to the cell if the UE 315-a and the UE 315-b sense that the cell is occupied. If the UEs 315 determine that the geographical areas associated with their individual occupancy grids 320 do not overlap with the geographical area of the aggregated occupancy grid 325, the UEs 315 may not generate their occupancy grids 320 and may not participate in the aggregation.

At the network entity 305, the aggregated occupancy grid 325 may be generated using OTA aggregation. The network entity 305 may monitor the REs 330 corresponding to cells included in the geographical area of the aggregated occupancy grid 325 and measure an energy of each RE 330 (e.g., measure an energy of signaling received over each RE 330). If an energy of an RE 330 exceeds a threshold, the network entity 305 may determine that a cell corresponding to the RE 330 is occupied. If the energy of the RE 330 does not exceed the threshold, the network entity 305 may determine that a cell corresponding to the RE 330 is not occupied. As described above, if a cell is unoccupied, the UEs 315 whose geographical area includes that cell may not transmit signaling on an RE 330 corresponding to the cell and as such, the received energy from the RE 330 may not exceed the threshold. Alternatively, if a cell is occupied, the UEs 315 whose geographical area includes that cell may transmit signaling on an RE 330 corresponding to the cell and as such, the received energy from the RE 330 may exceed the threshold. As described above, a single UE 315 or multiple UEs 315 may transmit signaling over an RE 330 if a cell corresponding to the RE 330 is occupied (e.g., multiple UEs 315 if geographical areas of two or more UEs 315 overlap). The methods as described herein may apply whether zero, one, or multiple UEs 315 are contributing to the energy of the RE 330. As such, in some examples the methods as described herein do not depend on a number of UEs 315 contributing to the energy of the RE 330.

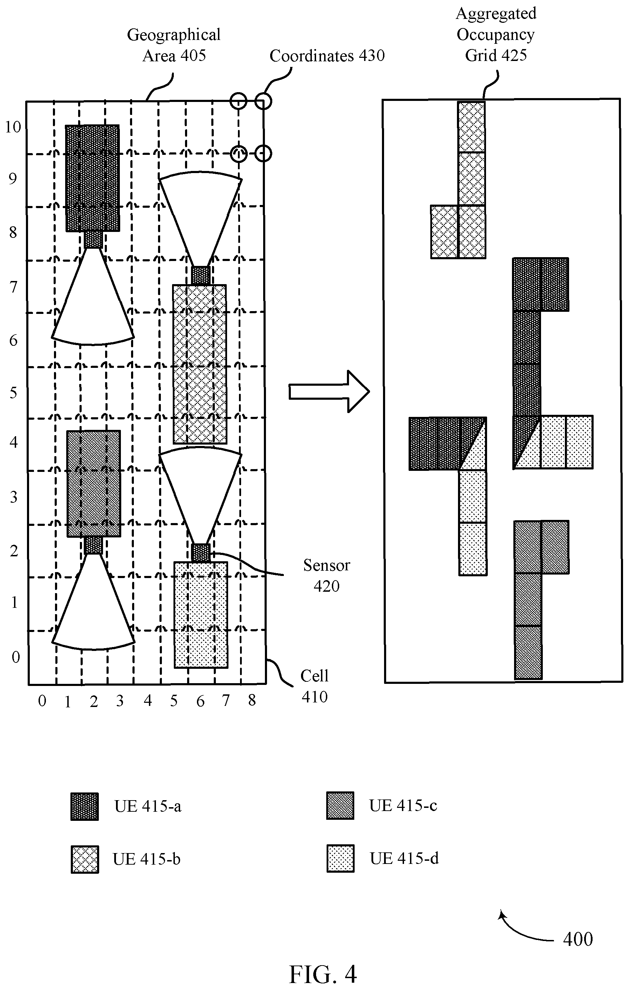

**FIG. 4** illustrates an example of an occupancy grid generation scheme 400 that supports dynamic aggregated occupancy grid generation in accordance with one or more aspects of the present disclosure. In some examples, the occupancy grid generation scheme 400 may implement aspects of a wireless communications system 100, a network architecture 200, and a wireless communications system 300. For example, the occupancy grid generation scheme 400 may be implemented by a network entity which may be an example of a network entity 105 or a network entity 305 as described with reference to FIGs. 1 and 3. In addition, the occupancy grid generation scheme 400 may be implemented by a UE which may be examples of a UE 115, a UE 215, or a UE 315 as described with reference to FIGs. 1 through 3.

As shown in FIG. 4, a network entity may generate an aggregated occupancy grid 425 for a 2 lane highway that covers a geographical area 405. At a given point in time, the 2 lane highway may include a set of UEs 415 (e.g., VUEs) and each UE 415 of the set of UEs 415 may be equipped with a front-mounted sensor 420 (e.g., a radar sensor). As described with reference to FIG. 3, before the network entity may generate the aggregated occupancy grid 425, the network entity may transmit control information associated with generating the aggregated occupancy grid 425 to the set of UEs 415 and the control information may include an indication of the geographical area 405, a size of cells 410 included in the geographical area 405, and a shape of the cells 410.

In some examples, the control information may include an explicit indication of the geographical area 405, the size of the cells 410, and the shape of the cells 410. For example, the control information may include multiple sets of coordinates 430 (e.g., global positioning system (GPS) coordinates) and each set of the multiple sets of coordinates 430 may be associated with a cell 410. The set of coordinates 430 may outline the shape of the associated cell 410 and the distance between the coordinates 430 of the set may indicate the size of the associated cell 410. In one example, the shape of a cell 410 may be a rectangle. In such example, the set of coordinates 430 associated with the cell 410 may include 4 coordinates 430 (e.g., one for each side of the rectangle). In such example, the control information may be signaled to the UEs 415 as part of application data. The cells 410 may collectively create the geographical area 405. In FIG. 4, the size of the cells 410 is common and the shape of the cells 410 is a rectangle. Collectively the cells 410 make up the geographical area 405 whose shape is a rectangle. More specifically, the geographical area 405 is partitioned into 99 cells 410. The width of the geographical area 405 is 9 cells 410 and a height of the geographical area is 11 cells 410.

In another example, the control information may not include an explicit indication of the size of the cells 410 and the shape of the cells 410. In such example, the control information may include boundaries of the geographical area 405. As one example, the boundaries of the geographical area 405 may be indicated using a set of coordinates 430. Additionally, the UE 415 may be preconfigured with a cell size and a cell shape. Upon receiving the control information, the UE 415 may perform partitioning of the geographical area 405 based on the cell size and the cell shape and determine the set of coordinates 430 for each cell 410. In another example, the UE 415 may be preconfigured (e.g., via RRC signaling) with a table that includes set of indices. Each index of the set of indices may correspond to a respective cell size and cell shape. In the control information, the UE 415 may receive an index and determine the cell size and cell shape using the preconfigured table and index. In such example, the control information may be received as part of downlink control information (DCI) and the DCI may include a field for the index. The UE 415 may then perform partitioning of the geographical area 405 based on the cell size and cell shape and determine the set of coordinates 430 for each cell 410.

In another example, the control information may not include an explicit indication of the geographical area 405, the size of the cells 410 and the shape of the cells 410. In such example, the UE 415 may be preconfigured (e.g., via RRC signaling) with a table that includes a set of indices. Each index of the set of indices may correspond to a respective geographical area 405 (e.g., boundaries of the geographical area 405), a cell shape, and a cell size. In the control information, the UE 415 may receive an index and determine the geographical area 405, a cell size, and a cell shape using the preconfigured table and index. In such example, the control information may be received as part of DCI and the DCI may include a field for the index. The UE 415 may then perform partitioning of the geographical area 405 based on the cell size and cell shape and determine the set of coordinates 430 for each cell 410.

After gaining knowledge of the geographical area 405, the UEs 415 may determine whether their own geographical areas (e.g., geographical areas covered by their own respective sensors 420) at least partially overlaps with the geographical area 405. As shown in FIG. 4, at the given time, the UE 415-a, the UE 415-b, the UE 415-c, and the UE 415-d may determine that their own geographical areas at least partially overlap with the geographical area 405. As such, the UE 415-a, the UE 415-b, the UE 415-c, and the UE 415-d may contribute information (e.g., occupancy grids) to help the network entity generate the aggregated occupancy grid 425.

Using their sensors 420, the UEs 415 may sense (e.g., during a same time duration) whether each cell 410 in their respective geographical area is occupied or unoccupied. As an example, the UE 415-d may sense that the cells 410 at position (3,4), (3,3), (3,2), (5,4), (6,4), and (7,4) in the geographical area 405 as occupied and the remaining cells 410 in its geographical area as unoccupied. Additionally, the UE 415-a may sense that the cells 410 at positions (6,7), (5,7), (5,6), (5,5), (5,4), (3,4), (2,4), and (1,4) and the remaining cells 410 in its geographical as unoccupied. As described with reference to FIG. 2, each cell 410 may be mapped to an RE in a one-to-one mapping. For occupied cells 410, the UE 415 may transmit signaling over the corresponding REs and for unoccupied cells 410, the UE 415 may refrain from transmitting signaling over the corresponding REs. If two or more UEs 415 sense that a same cell 410 is occupied, the two or more UEs 415 may transmit signaling over a same RE corresponding to the cell 410. For example, both the UE 415-a and the UE 415-d may transmit signaling over an RE corresponding to the cell at position (5,4).

The network entity may monitor the REs and determine whether an RE is occupied or unoccupied based on the signaling received over the RE. For example, the network entity may measure the energy level of each RE. If the energy level is above a threshold, the network entity may deem the cell 410 occupied. Alternatively, if the energy level is below the threshold, the network entity may deem the cell unoccupied. After sensing each of REs, the network entity may generate the aggregated occupancy grid 425 for the two lane highway for the given time.

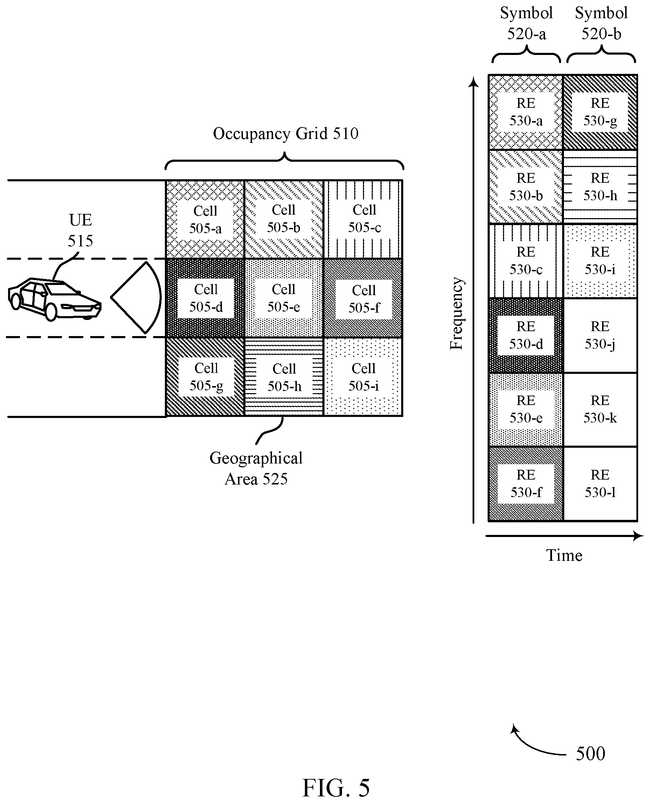

**FIG. 5** illustrates an example of an occupancy grid generation scheme 500 that supports dynamic aggregated occupancy grid generation in accordance with one or more aspects of the present disclosure. In some examples, the occupancy grid generation scheme 500 may implement aspects of a wireless communications system 100, a network architecture 200, a wireless communications system 300, and an occupancy grid generation scheme 400. For example, the occupancy grid generation scheme 500 may include a UE 515 which may be an example of a UE 115, a UE 215, a UE 315, and a UE 415 as described with reference to FIGs. 1 through 4.

As shown in FIG. 3, a UE 515 may be an example of a VUE and may be traveling along a highway with one or more other UEs 515 (not shown in FIG. 3). In some examples, a network entity may generate an aggregated occupancy grid for the highway and as such, the UE 515 may transmit an occupancy grid 510 to the network entity to contribute to occupancy grid aggregation. The occupancy grid 510 may indicate whether other UEs 515 or objects are within a geographical area 525 of the UE 515. In some examples, the UE 515 may include one or more sensors whose range indicates the geographical area 525 of the UE 515. Further, the geographical area 525 may be partitioned into multiples cells. For example, the geographical area 525 may partitioned into a set of cells 505 that includes a cell 505-a, a cell 505-b, a cell 505-c, a cell 505-d, a cell 505-e, a cell 505-f, a cell 505-g, a cell 505-h, and a cell 505-i.

As described with reference to FIG. 3, before the UE 515 may generate an occupancy grid 510, the UE 515 may receive control information associated with generating the aggregated occupancy grid from the network entity. In some examples, the control information may include an indication of a cell-to-RE mapping. The cell-to-RE mapping may be a one-to-one mapping. That is, a single cell 505 may be mapped to a single RE 530. As one example, the indication of the cell-to-RE mapping may include an indication of a starting symbol and a starting frequency range. Upon receiving the control information, the UE 515 may map each cell 505 to an RE 530. The mapping of the cells 505 may begin in the upper left corner of the geographical area 525 and continue from left to right and subsequently, move to the next row and so on. The mapping of the REs 515 may begin at a starting symbol and a starting frequency range and continue to adjacent REs 515 in the same symbol and subsequently, move to a different symbol (e.g., in a frequency first fashion). For example, the cell 505-a, the cell 505-b, the cell 505-c, the cell 505-d, the cell 505-e, the cell 505-f, the cell 505-g, the cell 505-h, and the cell 505-i may be mapped to an RE 530-a, an RE 530-b, an RE 530-c, an RE 530-d, an RE 530-e, an RE 530-f, an RE 530-g, an RE 530-h, and an RE 530-i, respectively.

In another example, the UE 515-a may be configured with a table including a set of a indices, where each index of the set of indices corresponds to an RE-to-cell mapping. In such example, the control information may include an index and the UE 515-a may determine the RE-to-cell mapping based on the index and the table. In some examples, the indication of the cell-to-RE mapping may be dynamic (e.g., indicated via downlink control information (DCI) or MAC control element (MAC-CE)) or semi-static (e.g., indicated via RRC signaling). In some examples, one or more REs 530 may be reserved for other signaling (e.g., a SSB or CSI-RSs). In such example, the UE 115 may skip the one or more REs 530 reserved for other signaling while performing the mapping scheme.

The UE 515 may determine (e.g., using the one or more sensors) whether each cell 505 is unoccupied or occupied. If the UE 515 determines that a cell 505 is occupied, the UE 515 may transmit signaling over an RE 530 mapped to the cell 505. Alternatively, if the UE 515 determines that a cell 505 is unoccupied, the UE 515 may not transmit signaling over the RE 530 mapped to the cell 505. As an example, the UE 515 may sense that the cell 505-b, the cell 505-c, the cell 505-g, and the cell 505-h is occupied and the remaining cells 505 are unoccupied. As such, the UE 515 may transmit signaling over the RE 530-b, the RE 530-c, the RE 530-g, and the RE 530-h.

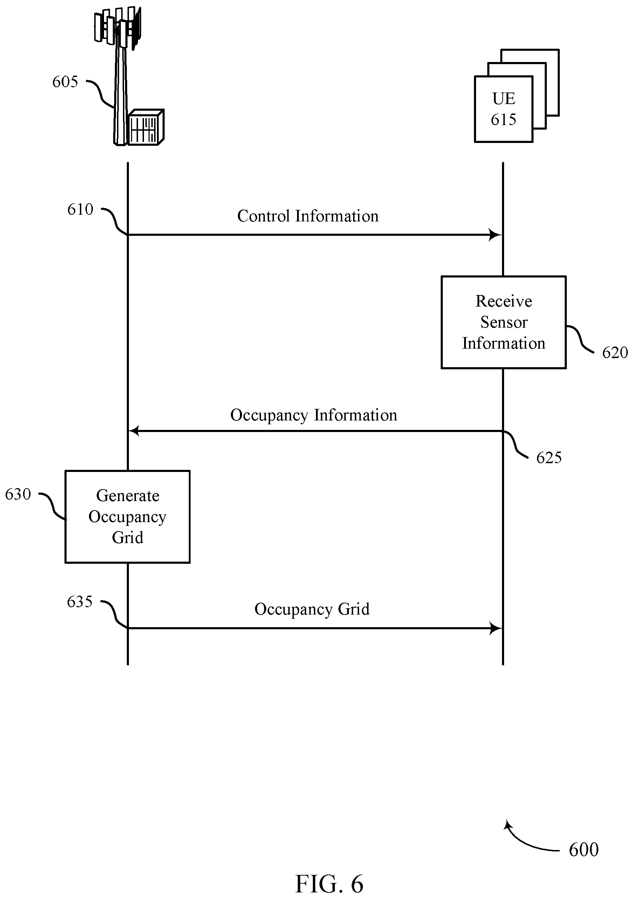

**FIG. 6** illustrates an example of a process flow 600 that supports dynamic aggregated occupancy grid generation in accordance with one or more aspects of the present disclosure. In some examples, the process flow 600 may include aspects of a wireless communications system 100, a network architecture 200, a wireless communications system 300, an occupancy grid generation scheme 400, and an occupancy grid generation scheme 500. For example, the process flow 600 may include a network entity 605 which may be an example of a network entity 105 and a network entity 305 as described with reference to FIGs. 1 and 3. The process flow 600 may also include UEs 615 which may be examples of UEs 115, UEs 215, UEs 315, UEs 415, and UEs 515 as described with reference to FIGs. 1 through 5. Alternative examples of the following may be implemented, where some steps are performed in a different order than described or are not performed at all. In some cases, steps may include additional features not mentioned below, or further steps may be added.

At 610, the network entity 605 may transmit control information to the UE 615. The control information may indicate an occupancy grid. The occupancy grid may include a set of cells that correspond to a geographical area and each cell may correspond to an RE of set of REs. In some examples, the control information may include an indication of one or more of a geographical area, a shape of a cell of the set of cells, or a size of the cell. In some examples, the UE 615 may additionally receive signaling (e.g., RRC signaling) indicating a table that includes a set of indices and each of the set of indices may correspond to one or more of the geographical area, the shape of the cell, or the size of the cell. In such example, the control information may include an index of the set of indices.

In some examples, the control information may additionally or alternatively include an indication of a mapping between the set of cells and the set of REs (e.g., one-to-one mapping). As one example, the control information may include an indication of an RE and a starting symbol. The UE 615 may map a first cell of the set of cells to the RE on the starting symbol and map a second cell of the set of cells to a second RE adjacent to the RE on the same starting symbol. Alternatively, the UE 615 may receive signaling (e.g., RRC signaling) indicating a table the includes a set of indices and each of the set of indices may correspond to a mapping. In such example, the control information may include an index of the set of indices. In some examples, one or more REs of the set of REs may be reserved for different signaling. In such example, the UE 615 may refrain from mapping a cell to the one or more RE reserved for the different signaling.

In some examples, occupancy grid aggregation may occur dynamically. In such examples, the control information may additionally or alternatively include an indication of a slot for transmitting occupancy information (e.g., a slot that includes the set of UEs) or the UE 615 may receive separate signaling, after the control information, from the network entity 605 indicating the slot. In either case, the control information or the signaling may be included in an uplink scheduling DCI (e.g., either unicast or multicast) and the slot indication may be indicated using a TRIV field of the uplink scheduling DCI. Alternatively, the occupancy grid aggregation may occur periodically. In such example, the UE 615 may receive second control information (e.g., either unicast or multicast) indicating a configured grant. The configured grant may include an indication of a slot that repeats according to some periodicity. Upon activating the configured grant, the UE 615 may perform occupancy grid aggregation using the slots of the configured grant. The set of REs used for the aggregation (e.g., as indicated by the mapping) may be assumed to be the same for all the periodically repeating slots.

In some examples, the UE 615 may receive the control information according to some periodicity. In another example, the UE 615 may transmit a request message for the configuration and receive the control information based on transmitting the request message. The UE 615 may operate according to the configuration until a second configuration associated with generating the occupancy grid using the OTA aggregation is received or until a counter incremented based on performing the configuration is reached.

At 620, the UE 615 may receive, from one or more sensors associated with the UE 615, first signaling indicating occupancy information for one or more cells of the set of cells. In some examples, the one or more sensors may include lidar, radar, or a camera. The occupancy information may inform the UE 615 on whether each of the one or more cells is occupied. In some examples, the UE 615 may determine a second geographical area based on a range of the one or more sensors and receive the first signaling based on the second geographical area being included in the geographical area of the occupancy grid indicated in the control information.

At 625, the UE 615 may transmit occupancy information to the network entity 605. In one example, the UE 615 may transmit, for each cell the one or more cell that are occupied, signaling via REs corresponding to the occupied cells. Additionally, the UE 615 may refrain from transmitting over REs that correspond to unoccupied cells of the one or more cells.

At 630, the network entity 605 may generate an aggregated occupancy grid. The network entity 605 may monitor the set of REs corresponding the set of cells and determine whether each cell is occupied based an energy of the corresponding RE. For example, the network entity may determine a cell of the set of cells is occupied based on the energy of the cell exceeding a threshold and determine a second cell of the set of cells is not occupied based on the energy of the second cell not exceeding the threshold. At 635, the network entity 605 may potentially transmit signaling indicating the aggregated occupancy grid to the UE 615.

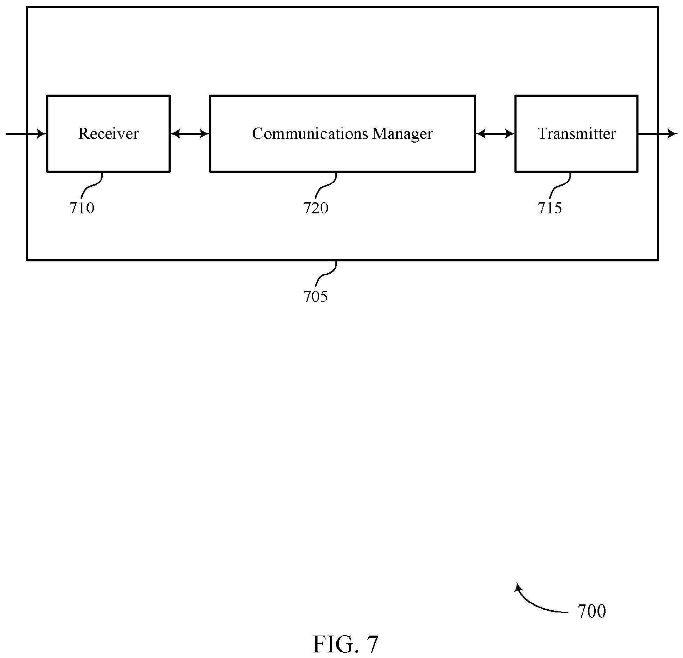

**FIG. 7** shows a block diagram 700 of a device 705 that supports dynamic aggregated occupancy grid generation in accordance with one or more aspects of the present disclosure. The device 705 may be an example of aspects of a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to dynamic aggregated occupancy grid generation). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to dynamic aggregated occupancy grid generation). In some examples, the transmitter 715 may be co-located with a receiver 710 in a transceiver module. The transmitter 715 may utilize a single antenna or a set of multiple antennas.

The communications manager 720, the receiver 710, the transmitter 715, or various combinations thereof or various components thereof may be examples of means for performing various aspects of dynamic aggregated occupancy grid generation as described herein. For example, the communications manager 720, the receiver 710, the transmitter 715, or various combinations or components thereof may support a method for performing one or more of the functions described herein.

In some examples, the communications manager 720, the receiver 710, the transmitter 715, or various combinations or components thereof may be implemented in hardware (e.g., in communications management circuitry). The hardware may include a processor, a digital signal processor (DSP), a central processing unit (CPU), an application-specific integrated circuit (ASIC), a field-programmable gate array (FPGA) or other programmable logic device, a microcontroller, discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally, or alternatively, in some examples, the communications manager 720, the receiver 710, the transmitter 715, or various combinations or components thereof may be implemented in code (e.g., as communications management software or firmware) executed by a processor. If implemented in code executed by a processor, the functions of the communications manager 720, the receiver 710, the transmitter 715, or various combinations or components thereof may be performed by a general-purpose processor, a DSP, a CPU, an ASIC, an FPGA, a microcontroller, or any combination of these or other programmable logic devices (e.g., configured as or otherwise supporting a means for performing the functions described in the present disclosure).

In some examples, the communications manager 720 may be configured to perform various operations (e.g., receiving, obtaining, monitoring, outputting, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to obtain information, output information, or perform various other operations as described herein.

The communications manager 720 may support wireless communication at a UE in accordance with examples as disclosed herein. For example, the communications manager 720 may be configured as or otherwise support a means for receiving control information indicating an occupancy grid including a set of multiple cells corresponding to a geographical area, cells of the set of multiple cells corresponding to REs of a set of multiple REs of a time-frequency resource grid. The communications manager 720 may be configured as or otherwise support a means for receiving, from one or more sensors, first signaling indicating occupancy information for a set of cells of the set of multiple cells. The communications manager 720 may be configured as or otherwise support a means for transmitting, for each cell of the set of cells that is occupied according to the occupancy information, second signaling via an RE of the set of multiple REs that corresponds to a cell that is occupied.

By including or configuring the communications manager 720 in accordance with examples as described herein, the device 705 (e.g., a processor controlling or otherwise coupled with the receiver 710, the transmitter 715, the communications manager 720, or a combination thereof) may support techniques for reduced processing and more efficient utilization of communication resources.

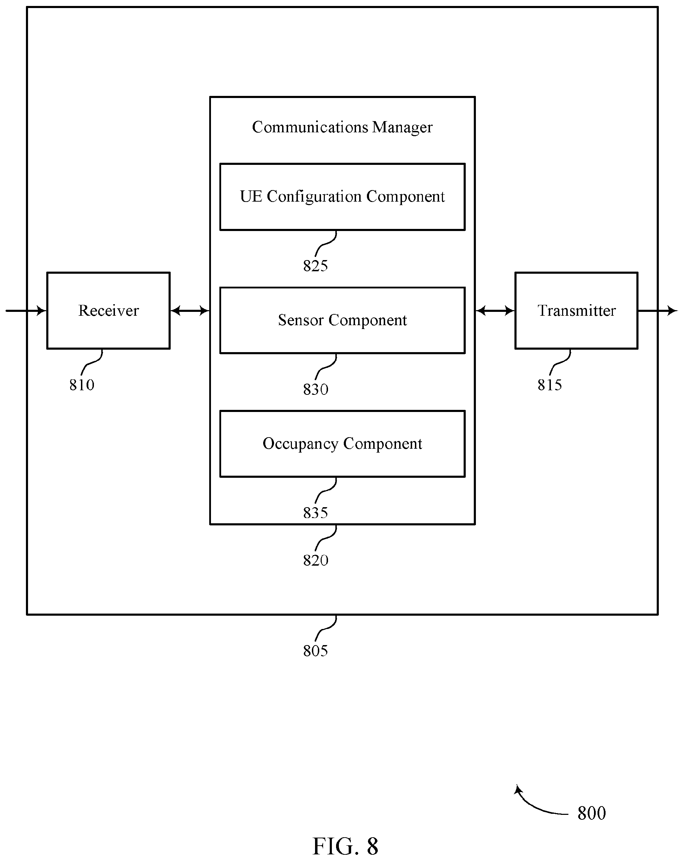

**FIG. 8** shows a block diagram 800 of a device 805 that supports dynamic aggregated occupancy grid generation in accordance with one or more aspects of the present disclosure. The device 805 may be an example of aspects of a device 705 or a UE 115 as described herein. The device 805 may include a receiver 810, a transmitter 815, and a communications manager 820. The device 805 may also include a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to dynamic aggregated occupancy grid generation). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to dynamic aggregated occupancy grid generation). In some examples, the transmitter 815 may be co-located with a receiver 810 in a transceiver module. The transmitter 815 may utilize a single antenna or a set of multiple antennas.

The device 805, or various components thereof, may be an example of means for performing various aspects of dynamic aggregated occupancy grid generation as described herein. For example, the communications manager 820 may include a UE configuration component 825, a sensor component 830, an occupancy component 835, or any combination thereof. The communications manager 820 may be an example of aspects of a communications manager 720 as described herein. In some examples, the communications manager 820, or various components thereof, may be configured to perform various operations (e.g., receiving, obtaining, monitoring, outputting, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to obtain information, output information, or perform various other operations as described herein.

The communications manager 820 may support wireless communication at a UE in accordance with examples as disclosed herein. The UE configuration component 825 may be configured as or otherwise support a means for receiving control information indicating an occupancy grid including a set of multiple cells corresponding to a geographical area, cells of the set of multiple cells corresponding to REs of a set of multiple REs of a time-frequency resource grid. The sensor component 830 may be configured as or otherwise support a means for receiving, from one or more sensors, first signaling indicating occupancy information for a set of cells of the set of multiple cells. The occupancy component 835 may be configured as or otherwise support a means for transmitting, for each cell of the set of cells that is occupied according to the occupancy information, second signaling via an RE of the set of multiple REs that corresponds to a cell that is occupied.

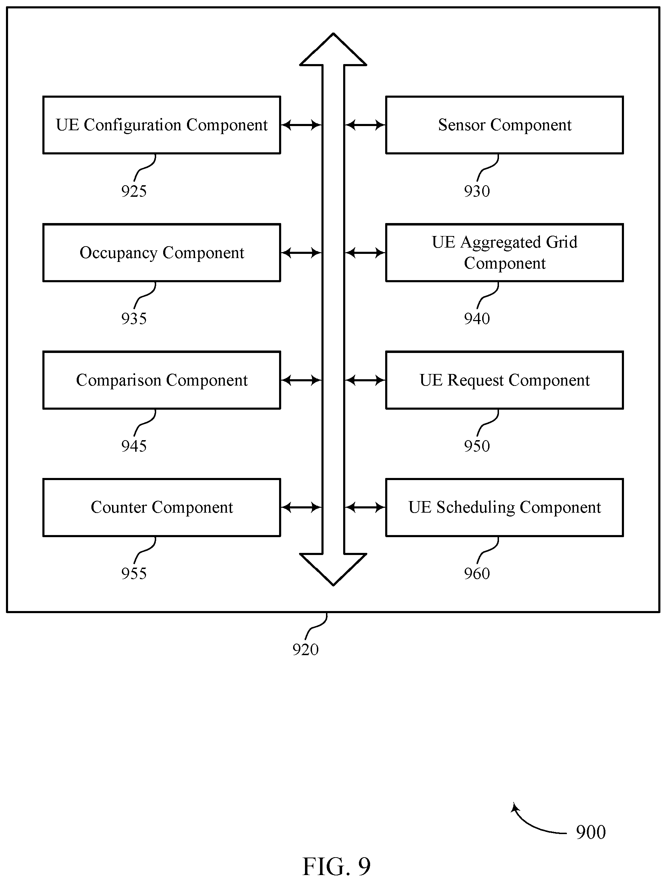

**FIG. 9** shows a block diagram 900 of a communications manager 920 that supports dynamic aggregated occupancy grid generation in accordance with one or more aspects of the present disclosure. The communications manager 920 may be an example of aspects of a communications manager 720, a communications manager 820, or both, as described herein. The communications manager 920, or various components thereof, may be an example of means for performing various aspects of dynamic aggregated occupancy grid generation as described herein. For example, the communications manager 920 may include a UE configuration component 925, a sensor component 930, an occupancy component 935, a UE aggregated grid component 940, a comparison component 945, a UE request component 950, a counter component 955, a UE scheduling component 960, or any combination thereof. Each of these components may communicate, directly or indirectly, with one another (e.g., via one or more buses).

The communications manager 920 may support wireless communication at a UE in accordance with examples as disclosed herein. The UE configuration component 925 may be configured as or otherwise support a means for receiving control information indicating an occupancy grid including a set of multiple cells corresponding to a geographical area, cells of the set of multiple cells corresponding to REs of a set of multiple REs of a time-frequency resource grid. The sensor component 930 may be configured as or otherwise support a means for receiving, from one or more sensors, first signaling indicating occupancy information for a set of cells of the set of multiple cells. The occupancy component 935 may be configured as or otherwise support a means for transmitting, for each cell of the set of cells that is occupied according to the occupancy information, second signaling via an RE of the set of multiple REs that corresponds to a cell that is occupied.

In some examples, the UE aggregated grid component 940 may be configured as or otherwise support a means for receiving third signaling indicating an aggregated occupancy grid for the geographical area, the aggregated occupancy grid based on the second signaling.

In some examples, the geographical area includes a first geographical area, and the comparison component 945 may be configured as or otherwise support a means for determining a second geographical area based on a range associated with the one or more sensors, where transmitting the second signaling is based on the second geographical area being within at least a portion of the first geographical area.

In some examples, to support receiving the control information, the UE configuration component 925 may be configured as or otherwise support a means for receiving an indication of the geographical area, a cell shape, a cell size, or a combination thereof.

In some examples, the UE configuration component 925 may be configured as or otherwise support a means for receiving an indication of a table that includes a set of multiple indices, each index of the set of multiple indices corresponding to one or more of the geographical area, the cell shape, or the cell size, where the indication of the geographical area, the cell shape, the cell size, or a combination thereof includes an index of the set of multiple indices.

In some examples, the control information indicating the occupancy grid is received according to a periodicity. In some examples, the UE request component 950 may be configured as or otherwise support a means for transmitting a request message for the control information indicating the occupancy grid, where receiving the control information indicating the occupancy grid is based on transmitting the request message.

In some examples, the UE configuration component 925 may be configured as or otherwise support a means for operating in accordance to a configuration associated with the occupancy grid until an indication of a second occupancy grid is received.

In some examples, the counter component 955 may be configured as or otherwise support a means for incrementing a counter based on transmitting the second signaling. In some examples, the UE configuration component 925 may be configured as or otherwise support a means for operating in accordance to a configuration associated with the occupancy grid until a value of the counter satisfies a threshold.

In some examples, to support receiving the control information indicating the occupancy grid, the UE configuration component 925 may be configured as or otherwise support a means for receiving an indication of a mapping between the set of multiple cells and the set of multiple REs, where the mapping is a one-to-one mapping between the set of multiple cells and the set of multiple REs.

In some examples, the UE scheduling component 960 may be configured as or otherwise support a means for receiving a DCI message indicating a slot for the UE to use to transmit the second signaling, the slot utilized by a set of multiple UEs to transmit on REs of the set of multiple REs that correspond to cells of the set of multiple cells of the geographical area that UEs of the set of multiple UEs determine are occupied.

In some examples, the UE scheduling component 960 may be configured as or otherwise support a means for receiving control signaling indicating a periodic set of slots for the UE to use to transmit the second signaling, each slot of the periodic set of slots utilized by a set of multiple UEs to transmit on REs of the set of multiple REs that correspond to cells of the set of multiple cells of the geographical area that UEs of the set of multiple UEs determine are occupied.

In some examples, the occupancy component 935 may be configured as or otherwise support a means for refraining from transmitting via one or more REs of the set of multiple REs that correspond to one or more second cells of the set of multiple cells that are indicated as unoccupied according to the occupancy information.

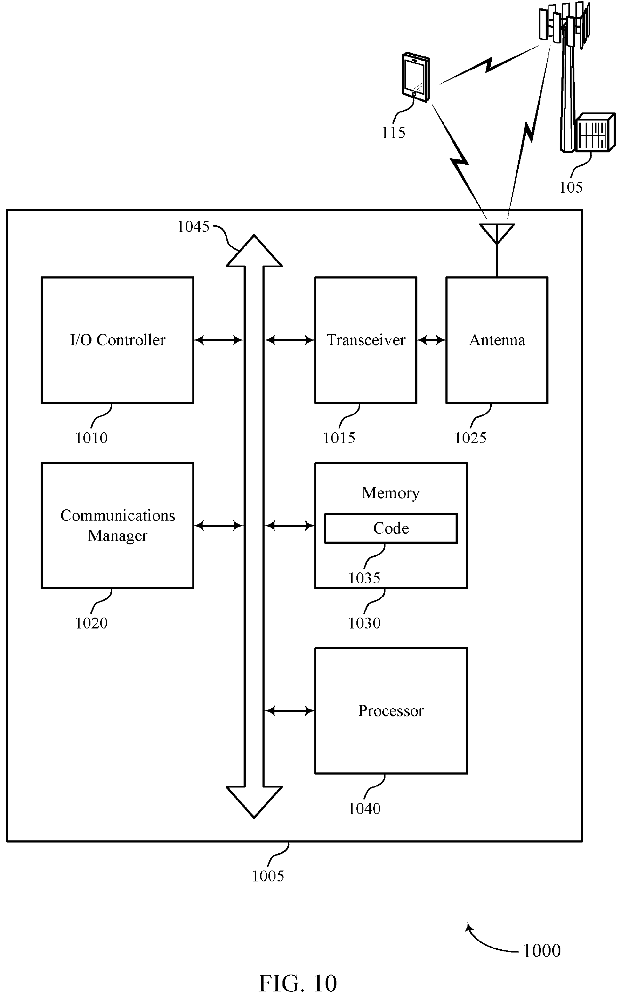

**FIG. 10** shows a diagram of a system 1000 including a device 1005 that supports dynamic aggregated occupancy grid generation in accordance with one or more aspects of the present disclosure. The device 1005 may be an example of or include the components of a device 705, a device 805, or a UE 115 as described herein. The device 1005 may communicate (e.g., wirelessly) with one or more network entities 105, one or more UEs 115, or any combination thereof. The device 1005 may include components for bi-directional voice and data communications including components for transmitting and receiving communications, such as a communications manager 1020, an input/output (I/O) controller 1010, a transceiver 1015, an antenna 1025, a memory 1030, code 1035, and a processor 1040. These components may be in electronic communication or otherwise coupled (e.g., operatively, communicatively, functionally, electronically, electrically) via one or more buses (e.g., a bus 1045).

The I/O controller 1010 may manage input and output signals for the device 1005. The I/O controller 1010 may also manage peripherals not integrated into the device 1005. In some cases, the I/O controller 1010 may represent a physical connection or port to an external peripheral. In some cases, the I/O controller 1010 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 1010 may represent or interact with a modem, a keyboard, a mouse, a touchscreen, or a similar device. In some cases, the I/O controller 1010 may be implemented as part of a processor, such as the processor 1040. In some cases, a user may interact with the device 1005 via the I/O controller 1010 or via hardware components controlled by the I/O controller 1010.

In some cases, the device 1005 may include a single antenna 1025. However, in some other cases, the device 1005 may have more than one antenna 1025, which may be capable of concurrently transmitting or receiving multiple wireless transmissions. The transceiver 1015 may communicate bi-directionally, via the one or more antennas 1025, wired, or wireless links as described herein. For example, the transceiver 1015 may represent a wireless transceiver and may communicate bi-directionally with another wireless transceiver. The transceiver 1015 may also include a modem to modulate the packets, to provide the modulated packets to one or more antennas 1025 for transmission, and to demodulate packets received from the one or more antennas 1025. The transceiver 1015, or the transceiver 1015 and one or more antennas 1025, may be an example of a transmitter 715, a transmitter 815, a receiver 710, a receiver 810, or any combination thereof or component thereof, as described herein.

The memory 1030 may include random access memory (RAM) and read-only memory (ROM). The memory 1030 may store computer-readable, computer-executable code 1035 including instructions that, when executed by the processor 1040, cause the device 1005 to perform various functions described herein. The code 1035 may be stored in a non-transitory computer-readable medium such as system memory or another type of memory. In some cases, the code 1035 may not be directly executable by the processor 1040 but may cause a computer (e.g., when compiled and executed) to perform functions described herein. In some cases, the memory 1030 may contain, among other things, a basic I/O system (BIOS) which may control basic hardware or software operation such as the interaction with peripheral components or devices.

The processor 1040 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1040 may be configured to operate a memory array using a memory controller. In some other cases, a memory controller may be integrated into the processor 1040. The processor 1040 may be configured to execute computer-readable instructions stored in a memory (e.g., the memory 1030) to cause the device 1005 to perform various functions (e.g., functions or tasks supporting dynamic aggregated occupancy grid generation). For example, the device 1005 or a component of the device 1005 may include a processor 1040 and memory 1030 coupled with or to the processor 1040, the processor 1040 and memory 1030 configured to perform various functions described herein.

The communications manager 1020 may support wireless communication at a UE in accordance with examples as disclosed herein. For example, the communications manager 1020 may be configured as or otherwise support a means for receiving control information indicating an occupancy grid including a set of multiple cells corresponding to a geographical area, cells of the set of multiple cells corresponding to REs of a set of multiple REs of a time-frequency resource grid. The communications manager 1020 may be configured as or otherwise support a means for receiving, from one or more sensors, first signaling indicating occupancy information for a set of cells of the set of multiple cells. The communications manager 1020 may be configured as or otherwise support a means for transmitting, for each cell of the set of cells that is occupied according to the occupancy information, second signaling via an RE of the set of multiple REs that corresponds to a cell that is occupied.

By including or configuring the communications manager 1020 in accordance with examples as described herein, the device 1005 may support techniques for reduced latency and more efficient utilization of communication resources.

In some examples, the communications manager 1020 may be configured to perform various operations (e.g., receiving, monitoring, transmitting) using or otherwise in cooperation with the transceiver 1015, the one or more antennas 1025, or any combination thereof. Although the communications manager 1020 is illustrated as a separate component, in some examples, one or more functions described with reference to the communications manager 1020 may be supported by or performed by the processor 1040, the memory 1030, the code 1035, or any combination thereof. For example, the code 1035 may include instructions executable by the processor 1040 to cause the device 1005 to perform various aspects of dynamic aggregated occupancy grid generation as described herein, or the processor 1040 and the memory 1030 may be otherwise configured to perform or support such operations.

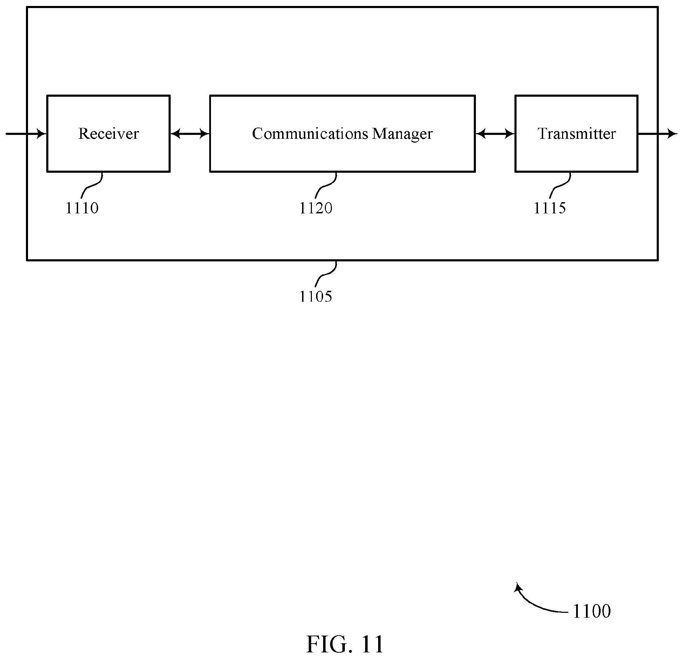

**FIG. 11** shows a block diagram 1100 of a device 1105 that supports dynamic aggregated occupancy grid generation in accordance with one or more aspects of the present disclosure. The device 1105 may be an example of aspects of a network entity 105 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for obtaining (e.g., receiving, determining, identifying) information such as user data, control information, or any combination thereof (e.g., I/Q samples, symbols, packets, protocol data units, service data units) associated with various channels (e.g., control channels, data channels, information channels, channels associated with a protocol stack). Information may be passed on to other components of the device 1105. In some examples, the receiver 1110 may support obtaining information by receiving signals via one or more antennas. Additionally, or alternatively, the receiver 1110 may support obtaining information by receiving signals via one or more wired (e.g., electrical, fiber optic) interfaces, wireless interfaces, or any combination thereof.

The transmitter 1115 may provide a means for outputting (e.g., transmitting, providing, conveying, sending) information generated by other components of the device 1105. For example, the transmitter 1115 may output information such as user data, control information, or any combination thereof (e.g., I/Q samples, symbols, packets, protocol data units, service data units) associated with various channels (e.g., control channels, data channels, information channels, channels associated with a protocol stack). In some examples, the transmitter 1115 may support outputting information by transmitting signals via one or more antennas. Additionally, or alternatively, the transmitter 1115 may support outputting information by transmitting signals via one or more wired (e.g., electrical, fiber optic) interfaces, wireless interfaces, or any combination thereof. In some examples, the transmitter 1115 and the receiver 1110 may be co-located in a transceiver, which may include or be coupled with a modem.

The communications manager 1120, the receiver 1110, the transmitter 1115, or various combinations thereof or various components thereof may be examples of means for performing various aspects of dynamic aggregated occupancy grid generation as described herein. For example, the communications manager 1120, the receiver 1110, the transmitter 1115, or various combinations or components thereof may support a method for performing one or more of the functions described herein.

In some examples, the communications manager 1120, the receiver 1110, the transmitter 1115, or various combinations or components thereof may be implemented in hardware (e.g., in communications management circuitry). The hardware may include a processor, a DSP, a CPU, an ASIC, an FPGA or other programmable logic device, a microcontroller, discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally, or alternatively, in some examples, the communications manager 1120, the receiver 1110, the transmitter 1115, or various combinations or components thereof may be implemented in code (e.g., as communications management software or firmware) executed by a processor. If implemented in code executed by a processor, the functions of the communications manager 1120, the receiver 1110, the transmitter 1115, or various combinations or components thereof may be performed by a general-purpose processor, a DSP, a CPU, an ASIC, an FPGA, a microcontroller, or any combination of these or other programmable logic devices (e.g., configured as or otherwise supporting a means for performing the functions described in the present disclosure).

In some examples, the communications manager 1120 may be configured to perform various operations (e.g., receiving, obtaining, monitoring, outputting, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to obtain information, output information, or perform various other operations as described herein.

The communications manager 1120 may support wireless communication at a network entity in accordance with examples as disclosed herein. For example, the communications manager 1120 may be configured as or otherwise support a means for transmitting control information indicating an occupancy grid including a set of multiple cells corresponding to a geographical area, cells of the set of multiple cells corresponding to REs of a set of multiple REs of a time-frequency resource grid. The communications manager 1120 may be configured as or otherwise support a means for receiving signaling via a set of REs of the set of multiple REs. The communications manager 1120 may be configured as or otherwise support a means for generating an aggregated occupancy grid for the geographical area based on determining, for each RE of the set of REs, that a cell of the set of multiple cells corresponding to an RE is occupied or unoccupied based on an energy received via the RE and an energy threshold.

By including or configuring the communications manager 1120 in accordance with examples as described herein, the device 1105 (e.g., a processor controlling or otherwise coupled with the receiver 1110, the transmitter 1115, the communications manager 1120, or a combination thereof) may support techniques for reduced processing and more efficient utilization of communication resources.

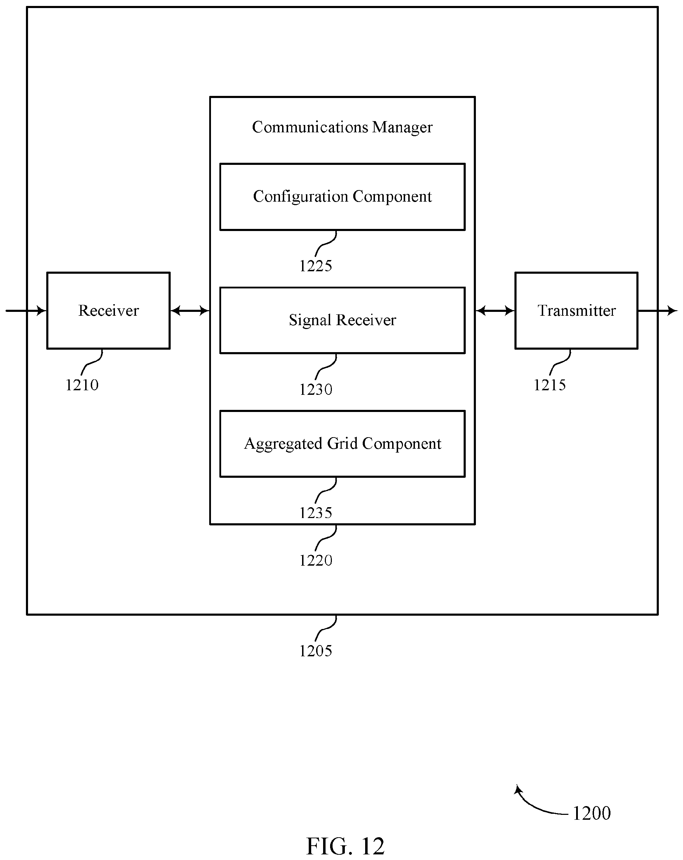

**FIG. 12** shows a block diagram 1200 of a device 1205 that supports dynamic aggregated occupancy grid generation in accordance with one or more aspects of the present disclosure. The device 1205 may be an example of aspects of a device 1105 or a network entity 105 as described herein. The device 1205 may include a receiver 1210, a transmitter 1215, and a communications manager 1220. The device 1205 may also include a processor. Each of these components may be in communication with one another (e.g., via one or more buses).

The receiver 1210 may provide a means for obtaining (e.g., receiving, determining, identifying) information such as user data, control information, or any combination thereof (e.g., I/Q samples, symbols, packets, protocol data units, service data units) associated with various channels (e.g., control channels, data channels, information channels, channels associated with a protocol stack). Information may be passed on to other components of the device 1205. In some examples, the receiver 1210 may support obtaining information by receiving signals via one or more antennas. Additionally, or alternatively, the receiver 1210 may support obtaining information by receiving signals via one or more wired (e.g., electrical, fiber optic) interfaces, wireless interfaces, or any combination thereof.

The transmitter 1215 may provide a means for outputting (e.g., transmitting, providing, conveying, sending) information generated by other components of the device 1205. For example, the transmitter 1215 may output information such as user data, control information, or any combination thereof (e.g., I/Q samples, symbols, packets, protocol data units, service data units) associated with various channels (e.g., control channels, data channels, information channels, channels associated with a protocol stack). In some examples, the transmitter 1215 may support outputting information by transmitting signals via one or more antennas. Additionally, or alternatively, the transmitter 1215 may support outputting information by transmitting signals via one or more wired (e.g., electrical, fiber optic) interfaces, wireless interfaces, or any combination thereof. In some examples, the transmitter 1215 and the receiver 1210 may be co-located in a transceiver, which may include or be coupled with a modem.

The device 1205, or various components thereof, may be an example of means for performing various aspects of dynamic aggregated occupancy grid generation as described herein. For example, the communications manager 1220 may include a configuration component 1225, a signal receiver 1230, an aggregated grid component 1235, or any combination thereof. The communications manager 1220 may be an example of aspects of a communications manager 1120 as described herein. In some examples, the communications manager 1220, or various components thereof, may be configured to perform various operations (e.g., receiving, obtaining, monitoring, outputting, transmitting) using or otherwise in cooperation with the receiver 1210, the transmitter 1215, or both. For example, the communications manager 1220 may receive information from the receiver 1210, send information to the transmitter 1215, or be integrated in combination with the receiver 1210, the transmitter 1215, or both to obtain information, output information, or perform various other operations as described herein.

The communications manager 1220 may support wireless communication at a network entity in accordance with examples as disclosed herein. The configuration component 1225 may be configured as or otherwise support a means for transmitting control information indicating an occupancy grid including a set of multiple cells corresponding to a geographical area, cells of the set of multiple cells corresponding to REs of a set of multiple REs of a time-frequency resource grid. The signal receiver 1230 may be configured as or otherwise support a means for receiving signaling via a set of REs of the set of multiple REs. The aggregated grid component 1235 may be configured as or otherwise support a means for generating an aggregated occupancy grid for the geographical area based on determining, for each RE of the set of REs, that a cell of the set of multiple cells corresponding to an RE is occupied or unoccupied based on an energy received via the RE and an energy threshold.

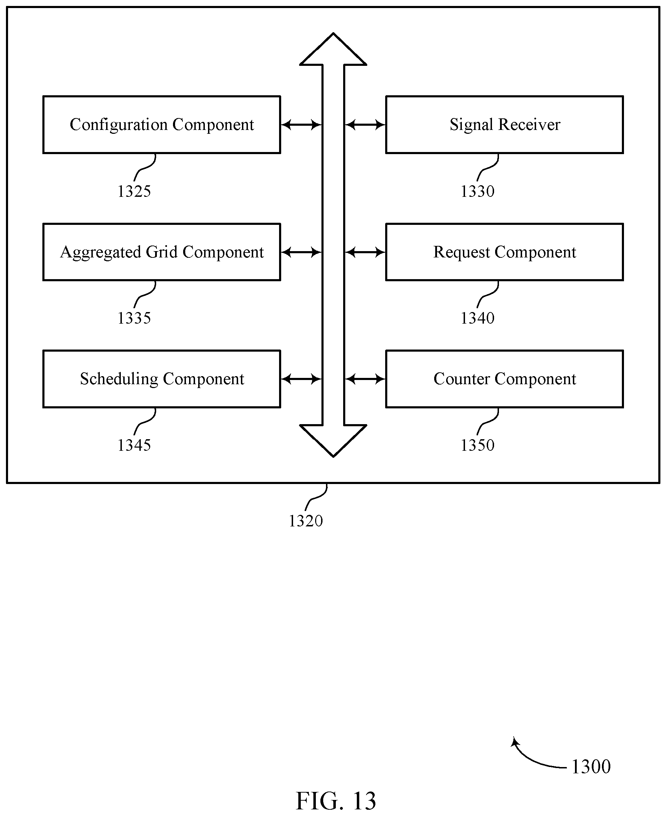

**FIG. 13** shows a block diagram 1300 of a communications manager 1320 that supports dynamic aggregated occupancy grid generation in accordance with one or more aspects of the present disclosure. The communications manager 1320 may be an example of aspects of a communications manager 1120, a communications manager 1220, or both, as described herein. The communications manager 1320, or various components thereof, may be an example of means for performing various aspects of dynamic aggregated occupancy grid generation as described herein. For example, the communications manager 1320 may include a configuration component 1325, a signal receiver 1330, an aggregated grid component 1335, a request component 1340, a scheduling component 1345, a counter component 1350, or any combination thereof. Each of these components may communicate, directly or indirectly, with one another (e.g., via one or more buses) which may include communications within a protocol layer of a protocol stack, communications associated with a logical channel of a protocol stack (e.g., between protocol layers of a protocol stack, within a device, component, or virtualized component associated with a network entity 105, between devices, components, or virtualized components associated with a network entity 105), or any combination thereof.

The communications manager 1320 may support wireless communication at a network entity in accordance with examples as disclosed herein. The configuration component 1325 may be configured as or otherwise support a means for transmitting control information indicating an occupancy grid including a set of multiple cells corresponding to a geographical area, cells of the set of multiple cells corresponding to REs of a set of multiple REs of a time-frequency resource grid. The signal receiver 1330 may be configured as or otherwise support a means for receiving signaling via a set of REs of the set of multiple REs. The aggregated grid component 1335 may be configured as or otherwise support a means for generating an aggregated occupancy grid for the geographical area based on determining, for each RE of the set of REs, that a cell of the set of multiple cells corresponding to an RE is occupied or unoccupied based on an energy received via the RE and an energy threshold.

In some examples, to support determining that the cell is occupied, the aggregated grid component 1335 may be configured as or otherwise support a means for determining that the cell is occupied based on the energy of the RE corresponding to the cell satisfying the energy threshold.

In some examples, the aggregated grid component 1335 may be configured as or otherwise support a means for determining that the cell is unoccupied based on the energy of the RE corresponding to the cell being below the energy threshold.

In some examples, the aggregated grid component 1335 may be configured as or otherwise support a means for transmitting, based on generating the aggregated occupancy grid, third signaling indicating the aggregated occupancy grid.

In some examples, to support transmitting the control information, the configuration component 1325 may be configured as or otherwise support a means for transmitting an indication of the geographical area, a cell shape, a cell size, or a combination thereof.

In some examples, the configuration component 1325 may be configured as or otherwise support a means for transmitting an indication of a table that includes a set of multiple indices, each index of the set of multiple indices corresponding to one or more of the geographical area, the cell shape, or the cell size, where the indication of the geographical area, the cell shape, the cell size, or a combination thereof includes an index of the set of multiple indices. In some examples, the control information is transmitted according to a periodicity.

In some examples, the request component 1340 may be configured as or otherwise support a means for receiving a request message for the control information indicating the occupancy grid, where transmitting the control information indicating the occupancy grid is based on receiving the request message.

In some examples, to support transmitting the control information, the configuration component 1325 may be configured as or otherwise support a means for transmitting a first configuration associated with generating the aggregated occupancy grid. In some examples, the configuration component 1325 may be configured as or otherwise support a means for transmitting second control information indicating a second configuration associated with generating the aggregated occupancy grid and the configuration component 1325 may be configured as or otherwise support a means for switching, based on transmitting the second control information, from operating according to the first configuration to operating according to the second configuration.

In some examples, to support transmitting the control information, the configuration component 1325 may be configured as or otherwise support a means for transmitting a first configuration associated with generating the aggregated occupancy grid. In some examples, the counter component 1350 may be configured as or otherwise support a means for incrementing a counter based on generating the aggregated occupancy grid and the configuration component 1325 may be configured as or otherwise support a means for transmitting second control information indicating a second configuration associated with generating the aggregated occupancy grid based on a value of the counter satisfying a threshold.

In some examples, to support transmitting the control information, the configuration component 1325 may be configured as or otherwise support a means for transmitting an indication of a mapping between the set of multiple cells and the set of multiple REs, where the mapping is a one-to-one mapping between the set of multiple cells and the set of multiple REs.

In some examples, the scheduling component 1345 may be configured as or otherwise support a means for transmitting, to a UE, a DCI message indicating a slot for the UE to use to transmit the signaling via the set of REs.

In some examples, the scheduling component 1345 may be configured as or otherwise support a means for transmitting, to a UE, control signaling indicating a periodic set of slots for the UE to use to transmit the signaling via the set of REs.

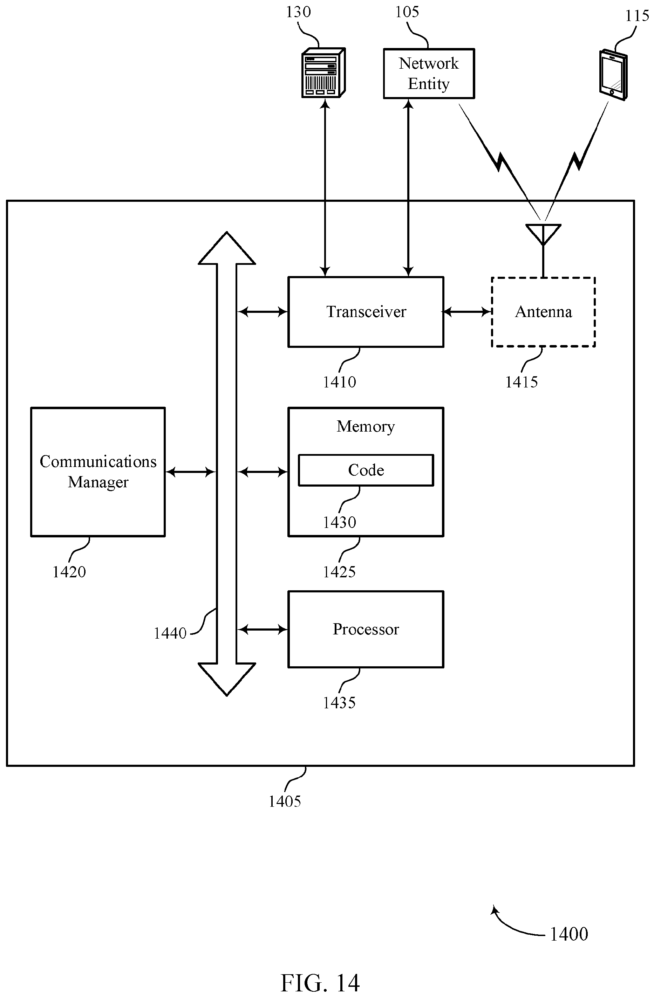

**FIG. 14** shows a diagram of a system 1400 including a device 1405 that supports dynamic aggregated occupancy grid generation in accordance with one or more aspects of the present disclosure. The device 1405 may be an example of or include the components of a device 1105, a device 1205, or a network entity 105 as described herein. The device 1405 may communicate with one or more network entities 105, one or more UEs 115, or any combination thereof, which may include communications over one or more wired interfaces, over one or more wireless interfaces, or any combination thereof. The device 1405 may include components that support outputting and obtaining communications, such as a communications manager 1420, a transceiver 1410, an antenna 1415, a memory 1425, code 1430, and a processor 1435. These components may be in electronic communication or otherwise coupled (e.g., operatively, communicatively, functionally, electronically, electrically) via one or more buses (e.g., a bus 1440).

The transceiver 1410 may support bi-directional communications via wired links, wireless links, or both as described herein. In some examples, the transceiver 1410 may include a wired transceiver and may communicate bi-directionally with another wired transceiver. Additionally, or alternatively, in some examples, the transceiver 1410 may include a wireless transceiver and may communicate bi-directionally with another wireless transceiver. In some examples, the device 1405 may include one or more antennas 1415, which may be capable of transmitting or receiving wireless transmissions (e.g., concurrently). The transceiver 1410 may also include a modem to modulate signals, to provide the modulated signals for transmission (e.g., by one or more antennas 1415, by a wired transmitter), to receive modulated signals (e.g., from one or more antennas 1415, from a wired receiver), and to demodulate signals. In some implementations, the transceiver 1410 may include one or more interfaces, such as one or more interfaces coupled with the one or more antennas 1415 that are configured to support various receiving or obtaining operations, or one or more interfaces coupled with the one or more antennas 1415 that are configured to support various transmitting or outputting operations, or a combination thereof. In some implementations, the transceiver 1410 may include or be configured for coupling with one or more processors or memory components that are operable to perform or support operations based on received or obtained information or signals, or to generate information or other signals for transmission or other outputting, or any combination thereof. In some implementations, the transceiver 1410, or the transceiver 1410 and the one or more antennas 1415, or the transceiver 1410 and the one or more antennas 1415 and one or more processors or memory components (for example, the processor 1435, or the memory 1425, or both), may be included in a chip or chip assembly that is installed in the device 1405. In some examples, the transceiver may be operable to support communications via one or more communications links (e.g., a communication link 125, a backhaul communication link 120, a midhaul communication link 162, a fronthaul communication link 168).

The memory 1425 may include RAM and ROM. The memory 1425 may store computer-readable, computer-executable code 1430 including instructions that, when executed by the processor 1435, cause the device 1405 to perform various functions described herein. The code 1430 may be stored in a non-transitory computer-readable medium such as system memory or another type of memory. In some cases, the code 1430 may not be directly executable by the processor 1435 but may cause a computer (e.g., when compiled and executed) to perform functions described herein. In some cases, the memory 1425 may contain, among other things, a BIOS which may control basic hardware or software operation such as the interaction with peripheral components or devices.

The processor 1435 may include an intelligent hardware device (e.g., a general-purpose processor, a DSP, an ASIC, a CPU, an FPGA, a microcontroller, a programmable logic device, discrete gate or transistor logic, a discrete hardware component, or any combination thereof). In some cases, the processor 1435 may be configured to operate a memory array using a memory controller. In some other cases, a memory controller may be integrated into the processor 1435. The processor 1435 may be configured to execute computer-readable instructions stored in a memory (e.g., the memory 1425) to cause the device 1405 to perform various functions (e.g., functions or tasks supporting dynamic aggregated occupancy grid generation). For example, the device 1405 or a component of the device 1405 may include a processor 1435 and memory 1425 coupled with the processor 1435, the processor 1435 and memory 1425 configured to perform various functions described herein. The processor 1435 may be an example of a cloud-computing platform (e.g., one or more physical nodes and supporting software such as operating systems, virtual machines, or container instances) that may host the functions (e.g., by executing code 1430) to perform the functions of the device 1405. The processor 1435 may be any one or more suitable processors capable of executing scripts or instructions of one or more software programs stored in the device 1405 (such as within the memory 1425). In some implementations, the processor 1435 may be a component of a processing system. A processing system may generally refer to a system or series of machines or components that receives inputs and processes the inputs to produce a set of outputs (which may be passed to other systems or components of, for example, the device 1405). For example, a processing system of the device 1405 may refer to a system including the various other components or subcomponents of the device 1405, such as the processor 1435, or the transceiver 1410, or the communications manager 1420, or other components or combinations of components of the device 1405. The processing system of the device 1405 may interface with other components of the device 1405, and may process information received from other components (such as inputs or signals) or output information to other components. For example, a chip or modem of the device 1405 may include a processing system and one or more interfaces to output information, or to obtain information, or both. The one or more interfaces may be implemented as or otherwise include a first interface configured to output information and a second interface configured to obtain information, or a same interface configured to output information and to obtain information, among other implementations. In some implementations, the one or more interfaces may refer to an interface between the processing system of the chip or modem and a transmitter, such that the device 1405 may transmit information output from the chip or modem. Additionally, or alternatively, in some implementations, the one or more interfaces may refer to an interface between the processing system of the chip or modem and a receiver, such that the device 1405 may obtain information or signal inputs, and the information may be passed to the processing system. A person having ordinary skill in the art will readily recognize that a first interface also may obtain information or signal inputs, and a second interface also may output information or signal outputs.

In some examples, a bus 1440 may support communications of (e.g., within) a protocol layer of a protocol stack. In some examples, a bus 1440 may support communications associated with a logical channel of a protocol stack (e.g., between protocol layers of a protocol stack), which may include communications performed within a component of the device 1405, or between different components of the device 1405 that may be co-located or located in different locations (e.g., where the device 1405 may refer to a system in which one or more of the communications manager 1420, the transceiver 1410, the memory 1425, the code 1430, and the processor 1435 may be located in one of the different components or divided between different components).

In some examples, the communications manager 1420 may manage aspects of communications with a core network 130 (e.g., via one or more wired or wireless backhaul links). For example, the communications manager 1420 may manage the transfer of data communications for client devices, such as one or more UEs 115. In some examples, the communications manager 1420 may manage communications with other network entities 105, and may include a controller or scheduler for controlling communications with UEs 115 in cooperation with other network entities 105. In some examples, the communications manager 1420 may support an X2 interface within an LTE/LTE-A wireless communications network technology to provide communication between network entities 105.

The communications manager 1420 may support wireless communication at a network entity in accordance with examples as disclosed herein. For example, the communications manager 1420 may be configured as or otherwise support a means for transmitting control information indicating an occupancy grid including a set of multiple cells corresponding to a geographical area, cells of the set of multiple cells corresponding to REs of a set of multiple REs of a time-frequency resource grid. The communications manager 1420 may be configured as or otherwise support a means for receiving signaling via a set of REs of the set of multiple REs. The communications manager 1420 may be configured as or otherwise support a means for generating an aggregated occupancy grid for the geographical area based on determining, for each RE of the set of REs, that a cell of the set of multiple cells corresponding to an RE is occupied or unoccupied based on an energy received via the RE and an energy threshold.

By including or configuring the communications manager 1420 in accordance with examples as described herein, the device 1405 may support techniques for reduced latency and more efficient utilization of communication resources.

In some examples, the communications manager 1420 may be configured to perform various operations (e.g., receiving, obtaining, monitoring, outputting, transmitting) using or otherwise in cooperation with the transceiver 1410, the one or more antennas 1415 (e.g., where applicable), or any combination thereof. Although the communications manager 1420 is illustrated as a separate component, in some examples, one or more functions described with reference to the communications manager 1420 may be supported by or performed by the transceiver 1410, the processor 1435, the memory 1425, the code 1430, or any combination thereof. For example, the code 1430 may include instructions executable by the processor 1435 to cause the device 1405 to perform various aspects of dynamic aggregated occupancy grid generation as described herein, or the processor 1435 and the memory 1425 may be otherwise configured to perform or support such operations.

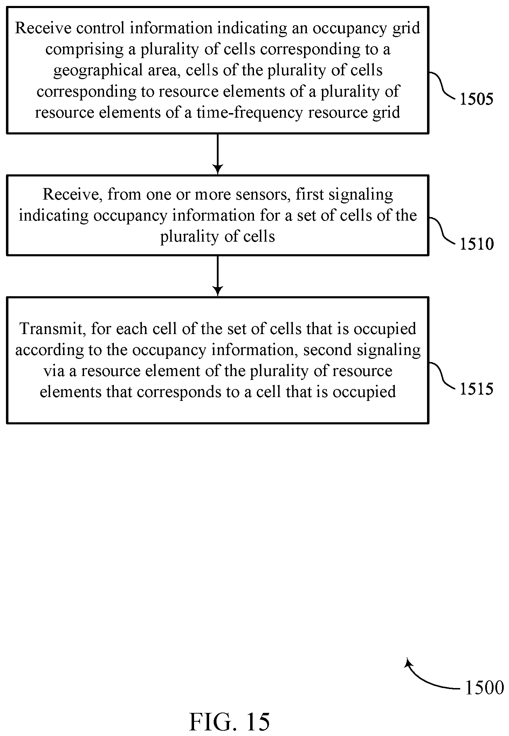

**FIG. 15** shows a flowchart illustrating a method 1500 that supports dynamic aggregated occupancy grid generation in accordance with one or more aspects of the present disclosure. The operations of the method 1500 may be implemented by a UE or its components as described herein. For example, the operations of the method 1500 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1505, the method may include receiving control information indicating an occupancy grid including a set of multiple cells corresponding to a geographical area, cells of the set of multiple cells corresponding to REs of a set of multiple REs of a time-frequency resource grid. The operations of 1505 may be performed in accordance with examples as disclosed herein. In some examples, aspects of the operations of 1505 may be performed by a UE configuration component 925 as described with reference to FIG. 9.

At 1510, the method may include receiving, from one or more sensors, first signaling indicating occupancy information for a set of cells of the set of multiple cells. The operations of 1510 may be performed in accordance with examples as disclosed herein. In some examples, aspects of the operations of 1510 may be performed by a sensor component 930 as described with reference to FIG. 9.

At 1515, the method may include transmitting, for each cell of the set of cells that is occupied according to the occupancy information, second signaling via an RE of the set of multiple REs that corresponds to a cell that is occupied. The operations of 1515 may be performed in accordance with examples as disclosed herein. In some examples, aspects of the operations of 1515 may be performed by an occupancy component 935 as described with reference to FIG. 9.

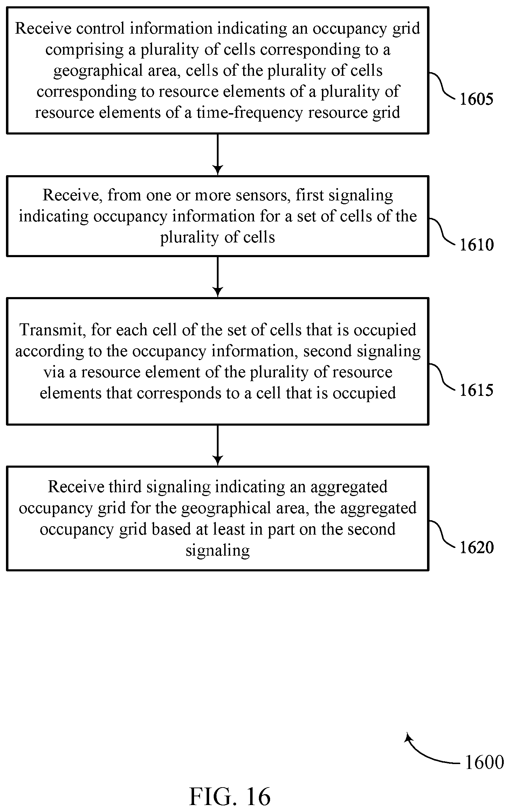

**FIG. 16** shows a flowchart illustrating a method 1600 that supports dynamic aggregated occupancy grid generation in accordance with one or more aspects of the present disclosure. The operations of the method 1600 may be implemented by a UE or its components as described herein. For example, the operations of the method 1600 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1605, the method may include receiving control information indicating an occupancy grid including a set of multiple cells corresponding to a geographical area, cells of the set of multiple cells corresponding to REs of a set of multiple REs of a time-frequency resource grid. The operations of 1605 may be performed in accordance with examples as disclosed herein. In some examples, aspects of the operations of 1605 may be performed by a UE configuration component 925 as described with reference to FIG. 9.

At 1610, the method may include receiving, from one or more sensors, first signaling indicating occupancy information for a set of cells of the set of multiple cells. The operations of 1610 may be performed in accordance with examples as disclosed herein. In some examples, aspects of the operations of 1610 may be performed by a sensor component 930 as described with reference to FIG. 9.

At 1615, the method may include transmitting, for each cell of the set of cells that is occupied according to the occupancy information, second signaling via an RE of the set of multiple REs that corresponds to a cell that is occupied. The operations of 1615 may be performed in accordance with examples as disclosed herein. In some examples, aspects of the operations of 1615 may be performed by an occupancy component 935 as described with reference to FIG. 9.

At 1620, the method may include receiving third signaling indicating an aggregated occupancy grid for the geographical area, the aggregated occupancy grid based on the second signaling. The operations of 1620 may be performed in accordance with examples as disclosed herein. In some examples, aspects of the operations of 1620 may be performed by a UE aggregated grid component 940 as described with reference to FIG. 9.

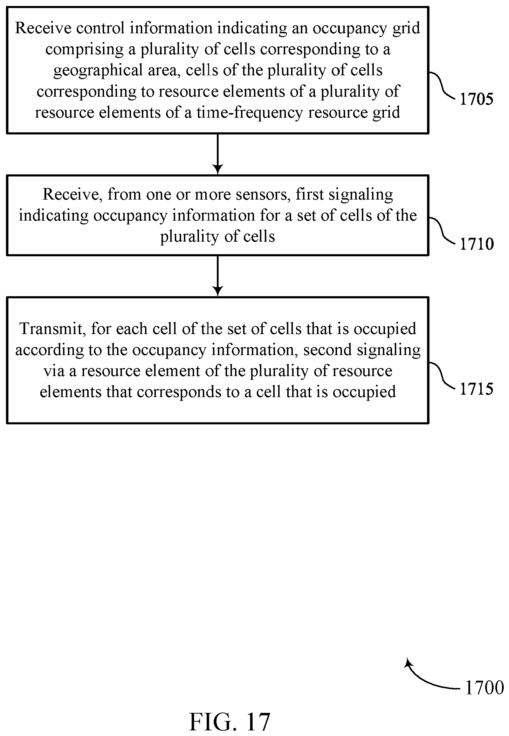

**FIG. 17** shows a flowchart illustrating a method 1700 that supports dynamic aggregated occupancy grid generation in accordance with one or more aspects of the present disclosure. The operations of the method 1700 may be implemented by a UE or its components as described herein. For example, the operations of the method 1700 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1705, the method may include receiving control information indicating an occupancy grid including a set of multiple cells corresponding to a geographical area, cells of the set of multiple cells corresponding to REs of a set of multiple REs of a time-frequency resource grid. The operations of 1705 may be performed in accordance with examples as disclosed herein. In some examples, aspects of the operations of 1705 may be performed by a UE configuration component 925 as described with reference to FIG. 9.

At 1710, the method may include receiving, from one or more sensors, first signaling indicating occupancy information for a set of cells of the set of multiple cells. The operations of 1710 may be performed in accordance with examples as disclosed herein. In some examples, aspects of the operations of 1710 may be performed by a sensor component 930 as described with reference to FIG. 9.

At 1715, the method may include transmitting, for each cell of the set of cells that is occupied according to the occupancy information, second signaling via an RE of the set of multiple REs that corresponds to a cell that is occupied. The operations of 1715 may be performed in accordance with examples as disclosed herein. In some examples, aspects of the operations of 1715 may be performed by an occupancy component 935 as described with reference to FIG. 9.

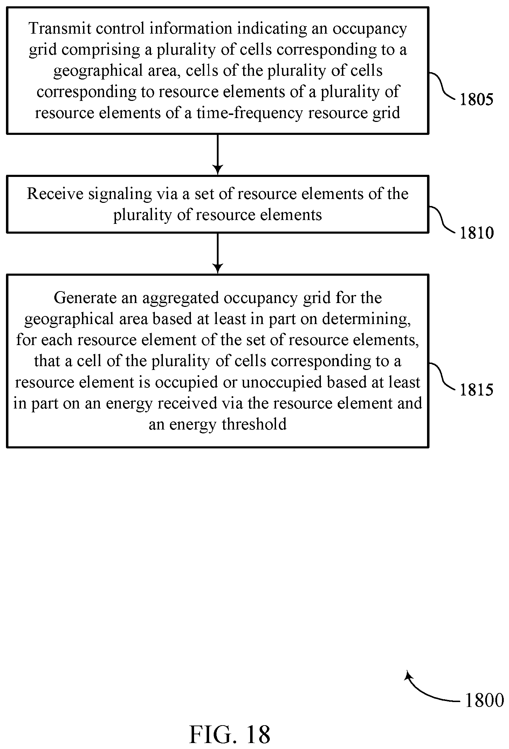

**FIG. 18** shows a flowchart illustrating a method 1800 that supports dynamic aggregated occupancy grid generation in accordance with one or more aspects of the present disclosure. The operations of the method 1800 may be implemented by a network entity or its components as described herein. For example, the operations of the method 1800 may be performed by a network entity as described with reference to FIGs. 1 through 6 and 11 through 14. In some examples, a network entity may execute a set of instructions to control the functional elements of the network entity to perform the described functions. Additionally, or alternatively, the network entity may perform aspects of the described functions using special-purpose hardware.

At 1805, the method may include transmitting control information indicating an occupancy grid including a set of multiple cells corresponding to a geographical area, cells of the set of multiple cells corresponding to REs of a set of multiple REs of a time-frequency resource grid. The operations of 1805 may be performed in accordance with examples as disclosed herein. In some examples, aspects of the operations of 1805 may be performed by a configuration component 1325 as described with reference to FIG. 13.

At 1810, the method may include receiving signaling via a set of REs of the set of multiple REs. The operations of 1810 may be performed in accordance with examples as disclosed herein. In some examples, aspects of the operations of 1810 may be performed by a signal receiver 1330 as described with reference to FIG. 13.

At 1815, the method may include generating an aggregated occupancy grid for the geographical area based on determining, for each RE of the set of REs, that a cell of the set of multiple cells corresponding to an RE is occupied or unoccupied based on an energy received via the RE and an energy threshold. The operations of 1815 may be performed in accordance with examples as disclosed herein. In some examples, aspects of the operations of 1815 may be performed by an aggregated grid component 1335 as described with reference to FIG. 13.

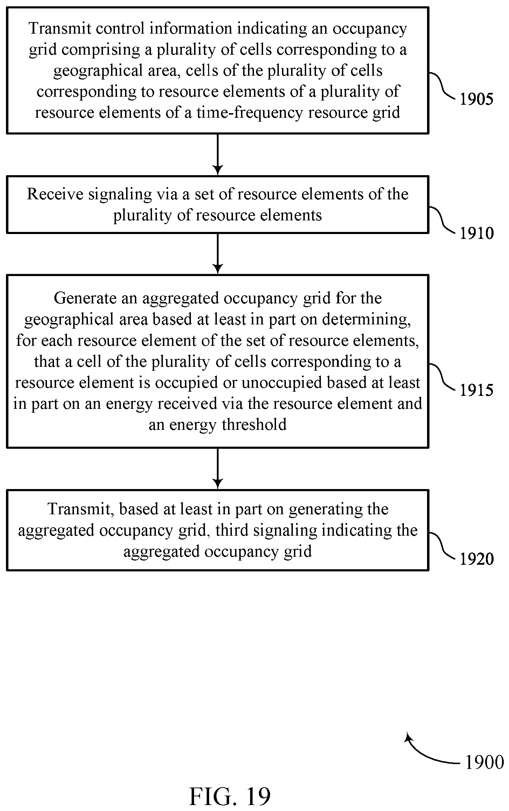

**FIG. 19** shows a flowchart illustrating a method 1900 that supports dynamic aggregated occupancy grid generation in accordance with one or more aspects of the present disclosure. The operations of the method 1900 may be implemented by a network entity or its components as described herein. For example, the operations of the method 1900 may be performed by a network entity as described with reference to FIGs. 1 through 6 and 11 through 14. In some examples, a network entity may execute a set of instructions to control the functional elements of the network entity to perform the described functions. Additionally, or alternatively, the network entity may perform aspects of the described functions using special-purpose hardware.

At 1905, the method may include transmitting control information indicating an occupancy grid including a set of multiple cells corresponding to a geographical area, cells of the set of multiple cells corresponding to REs of a set of multiple REs of a time-frequency resource grid. The operations of 1905 may be performed in accordance with examples as disclosed herein. In some examples, aspects of the operations of 1905 may be performed by a configuration component 1325 as described with reference to FIG. 13.

At 1910, the method may include receiving signaling via a set of REs of the set of multiple REs. The operations of 1910 may be performed in accordance with examples as disclosed herein. In some examples, aspects of the operations of 1910 may be performed by a signal receiver 1330 as described with reference to FIG. 13.

At 1915, the method may include generating an aggregated occupancy grid for the geographical area based on determining, for each RE of the set of REs, that a cell of the set of multiple cells corresponding to an RE is occupied or unoccupied based on an energy received via the RE and an energy threshold. The operations of 1915 may be performed in accordance with examples as disclosed herein. In some examples, aspects of the operations of 1915 may be performed by an aggregated grid component 1335 as described with reference to FIG. 13.

At 1920, the method may include transmitting, based on generating the aggregated occupancy grid, third signaling indicating the aggregated occupancy grid. The operations of 1920 may be performed in accordance with examples as disclosed herein. In some examples, aspects of the operations of 1920 may be performed by an aggregated grid component 1335 as described with reference to FIG. 13.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed using a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor but, in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented using hardware, software executed by a processor, firmware, or any combination thereof. If implemented using software executed by a processor, the functions may be stored as or transmitted using one or more instructions or code of a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one location to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc. Disks may reproduce data magnetically, and discs may reproduce data optically using lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a variety of actions and, therefore, "determining" can include calculating, computing, processing, deriving, investigating, looking up (such as via looking up in a table, a database or another data structure), ascertaining and the like. Also, "determining" can include receiving (e.g., receiving information), accessing (e.g., accessing data stored in memory) and the like. Also, "determining" can include resolving, obtaining, selecting, choosing, establishing, and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure.

## Claims

1. An apparatus for wireless communication at a user equipment, UE (115), comprising:
a processor (1040);
memory (1030) coupled with the processor (1040); and
instructions stored in the memory (1030) and executable by the processor (1040) to cause the apparatus to:
receive (1505) control information indicating an occupancy grid comprising a plurality of cells corresponding to a geographical area, cells of the plurality of cells corresponding to resource elements of a plurality of resource elements of a time-frequency resource grid;
receive (1510), from one or more sensors, first signaling indicating occupancy information for a set of cells of the plurality of cells; and
transmit (1515), for each cell of the set of cells that is occupied according to the occupancy information, second signaling via a resource element of the plurality of resource elements that corresponds to a cell that is occupied.

2. The apparatus of claim 1, wherein the instructions are further executable by the processor to cause the apparatus to:
receive third signaling indicating an aggregated occupancy grid for the geographical area, the aggregated occupancy grid based at least in part on the second signaling.

3. The apparatus of claim 1, wherein the geographical area comprises a first geographical area, and the instructions are further executable by the processor to cause the apparatus to:
determine a second geographical area based at least in part on a range associated with the one or more sensors, wherein transmitting the second signaling is based at least in part on the second geographical area being within at least a portion of the first geographical area.

4. The apparatus of claim 1, wherein the instructions to receive the control information are executable by the processor to cause the apparatus to:
receive an indication of the geographical area, a cell shape, a cell size, or a combination thereof, wherein, optionally,
the instructions are further executable by the processor to cause the apparatus to:
receive an indication of a table that includes a plurality of indices, each index of the plurality of indices corresponding to one or more of the geographical area, the cell shape, or the cell size, wherein the indication of the geographical area, the cell shape, the cell size, or a combination thereof comprises an index of the plurality of indices.

5. The apparatus of claim 1, wherein the control information indicating the occupancy grid is received according to a periodicity, and/or:
wherein the instructions are further executable by the processor to cause the apparatus to:
transmit a request message for the control information indicating the occupancy grid, wherein receiving the control information indicating the occupancy grid is based at least in part on transmitting the request message.

6. The apparatus of claim 1, wherein the instructions are further executable by the processor to cause the apparatus to:
operate in accordance to a configuration associated with the occupancy grid until an indication of a second occupancy grid is received, and/or:
wherein the instructions are further executable by the processor to cause the apparatus to:
increment a counter based at least in part on transmitting the second signaling; and
operate in accordance to a configuration associated with the occupancy grid until a value of the counter satisfies a threshold.

7. The apparatus of claim 1, wherein the instructions to receive the control information indicating the occupancy grid are executable by the processor to cause the apparatus to:
receive an indication of a mapping between the plurality of cells and the plurality of resource elements, wherein the mapping is a one-to-one mapping between the plurality of cells and the plurality of resource elements, and/or:
wherein the instructions are further executable by the processor to cause the apparatus to:
receive a downlink control information message indicating a slot for the UE to use to transmit the second signaling, the slot utilized by a plurality of UEs to transmit on resource elements of the plurality of resource elements that correspond to cells of the plurality of cells of the geographical area that UEs of the plurality of UEs determine are occupied, and/or:
wherein the instructions are further executable by the processor to cause the apparatus to:
receive control signaling indicating a periodic set of slots for the UE to use to transmit the second signaling, each slot of the periodic set of slots utilized by a plurality of UEs to transmit on resource elements of the plurality of resource elements that correspond to cells of the plurality of cells of the geographical area that UEs of the plurality of UEs determine are occupied.

8. The apparatus of claim 1, wherein the instructions are further executable by the processor to cause the apparatus to:
refrain from transmitting via one or more resource elements of the plurality of resource elements that correspond to one or more second cells of the plurality of cells that are indicated as unoccupied according to the occupancy information.

9. An apparatus for wireless communication at a network entity (105), comprising:
a processor (1435);
memory (1425) coupled with the processor (1435); and
instructions stored in the memory (1425) and executable by the processor (1435) to cause the apparatus to:
transmit (1805) control information indicating an occupancy grid comprising a plurality of cells corresponding to a geographical area, cells of the plurality of cells corresponding to resource elements of a plurality of resource elements of a time-frequency resource grid;
receive (1810) signaling via a set of resource elements of the plurality of resource elements; and
generate (1815) an aggregated occupancy grid for the geographical area based at least in part on determining, for each resource element of the set of resource elements, that a cell of the plurality of cells corresponding to a resource element is occupied or unoccupied based at least in part on an energy received via the resource element and an energy threshold.

10. The apparatus of claim 9, wherein the instructions to determine that the cell is occupied are further executable by the processor to cause the apparatus to:
determine that the cell is occupied based at least in part on the energy of the resource element corresponding to the cell satisfying the energy threshold, and/or:
wherein the instructions are further executable by the processor to cause the apparatus to:
determine that the cell is unoccupied based at least in part on the energy of the resource element corresponding to the cell being below the energy threshold, and/or:
wherein the instructions are further executable by the processor to cause the apparatus to:
transmit, based at least in part on generating the aggregated occupancy grid, third signaling indicating the aggregated occupancy grid.

11. The apparatus of claim 9, wherein the instructions to transmit the control information are executable by the processor to cause the apparatus to:
transmit an indication of the geographical area, a cell shape, a cell size, or a combination thereof, wherein, optionally, the instructions are further executable by the processor to cause the apparatus to:
transmit an indication of a table that includes a plurality of indices, each index of the plurality of indices corresponding to one or more of the geographical area, the cell shape, or the cell size, wherein the indication of the geographical area, the cell shape, the cell size, or a combination thereof comprises an index of the plurality of indices, and/or:
wherein the control information is transmitted according to a periodicity, and/or:
wherein the instructions are further executable by the processor to cause the apparatus to:
receive a request message for the control information indicating the occupancy grid, wherein transmitting the control information indicating the occupancy grid is based at least in part on receiving the request message.

12. The apparatus of claim 9, wherein the instructions to transmit the control information are executable by the processor to cause the apparatus to:
transmit a first configuration associated with generating the aggregated occupancy grid, wherein the instructions are further executable by the processor to cause the apparatus to:
transmit second control information indicating a second configuration associated with generating the aggregated occupancy grid; and
switch, base at least in part on transmitting the second control information, from operating according to the first configuration to operating according to the second configuration, and/or:
wherein the instructions to transmit the control information are executable by the processor to cause the apparatus to:
transmit a first configuration associated with generating the aggregated occupancy grid, wherein the instructions are further executable by the processor to cause the apparatus to:
increment a counter based at least in part on generating the aggregated occupancy grid; and
transmit second control information indicating a second configuration associated with generating the aggregated occupancy grid based at least in part on a value of the counter satisfying a threshold.

13. The apparatus of claim 9, wherein the instructions to transmit the control information are executable by the processor to cause the apparatus to:
transmit an indication of a mapping between the plurality of cells and the plurality of resource elements, wherein the mapping is a one-to-one mapping between the plurality of cells and the plurality of resource elements, and/or:
wherein the instructions are further executable by the processor to cause the apparatus to:
transmit, to a user equipment, UE, a downlink control information message indicating a slot for the UE to use to transmit the signaling via the set of resource elements, and/or:
wherein the instructions are further executable by the processor to cause the apparatus to:
transmit, to a user equipment, UE, control signaling indicating a periodic set of slots for the UE to use to transmit the signaling via the set of resource elements.

14. A method for wireless communication at a user equipment, UE (115), comprising:
receiving (1505) control information indicating an occupancy grid comprising a plurality of cells corresponding to a geographical area, cells of the plurality of cells corresponding to resource elements of a plurality of resource elements of a time-frequency resource grid;
receiving (1510), from one or more sensors, first signaling indicating occupancy information for a set of cells of the plurality of cells; and
transmitting (1515), for each cell of the set of cells that is occupied according to the occupancy information, second signaling via a resource element of the plurality of resource elements that corresponds to a cell that is occupied.

15. A method for wireless communication at a network entity (105), comprising:
transmitting (1805) control information indicating an occupancy grid comprising a plurality of cells corresponding to a geographical area, cells of the plurality of cells corresponding to resource elements of a plurality of resource elements of a time-frequency resource grid;
receiving (1810) signaling via a set of resource elements of the plurality of resource elements; and
generating (1815) an aggregated occupancy grid for the geographical area based at least in part on determining, for each resource element of the set of resource elements, that a cell of the plurality of cells corresponding to a resource element is occupied or unoccupied based at least in part on an energy received via the resource element and an energy threshold.

## Patentansprüche

1. Eine Vorrichtung für eine drahtlose Kommunikation an einem Benutzergerät (User Equipment bzw. UE) (115), aufweisend:
einen Prozessor (1040),
einen Speicher (1030), der mit dem Prozessor (1040) gekoppelt ist, und
Befehle, die in dem Speicher (1030) gespeichert sind und durch den Prozessor (1040) ausgeführt werden können, um die Vorrichtung zu veranlassen zum:
Empfangen (1505) von Steuerinformationen, die ein Belegungsraster angeben, das eine Vielzahl von Zellen in Entsprechung zu einem geografischen Bereich aufweist, wobei Zellen aus der Vielzahl von Zellen Ressourcenelementen aus einer Vielzahl von Ressourcenelementen eines Zeit-Frequenz-Ressourcenrasters entsprechen,
Empfangen (1510), von einem oder mehreren Sensoren, einer ersten Signalisierung, die Belegungsinformationen für einen Satz von Zellen aus der Vielzahl von Zellen angibt, und
Senden (1515), für jede Zelle aus dem Satz von Zellen, die gemäß den Belegungsinformationen belegt ist, einer zweiten Signalisierung über ein Ressourcenelement aus der Vielzahl von Ressourcenelementen, das einer belegten Zelle entspricht.

2. Vorrichtung nach Anspruch 1, wobei die Befehle weiterhin durch den Prozessor ausgeführt werden können, um die Vorrichtung zu veranlassen zum:
Empfangen einer dritten Signalisierung, die ein aggregiertes Belegungsraster für den geografischen Bereich angibt, wobei das aggregierte Belegungsraster wenigstens teilweise auf der zweiten Signalisierung basiert.

3. Vorrichtung nach Anspruch 1, wobei der geografische Bereich ein erster geografischer Bereich ist und wobei die Befehle weiterhin durch den Prozessor ausgeführt werden können, um die Vorrichtung zu veranlassen zum:
Bestimmen eines zweiten geografischen Bereichs basierend wenigstens teilweise auf einem mit dem einen oder den mehreren Sensoren assoziierten Bereich, wobei das Senden der zweiten Signalisierung wenigstens teilweise darauf basiert, dass sich der zweite geografische Bereich in wenigstens einem Teil des ersten geografischen Bereichs befindet.

4. Vorrichtung nach Anspruch 1, wobei die Befehle für das Empfangen der Steuerinformationen durch den Prozessor ausgeführt werden können, um die Vorrichtung zu veranlassen zum:
Empfangen einer Angabe des geografischen Bereichs, einer Zellenform, einer Zellengröße oder einer Kombination aus diesen, wobei optional:
die Befehle weiterhin durch den Prozessor ausgeführt werden können, um die Vorrichtung zu veranlassen zum:
Empfangen einer Angabe einer Tabelle, die eine Vielzahl von Indizes enthält, wobei jeder Index aus der Vielzahl von Indizes einem oder mehreren des geografischen Bereichs, der Zellenform oder der Zellengröße entspricht, wobei die Angabe des geografischen Bereichs, der Zellenform, der Zellengröße oder einer Kombination aus diesen einen Index aus der Vielzahl von Indizes aufweist.

5. Vorrichtung nach Anspruch 1, wobei die Steuerinformationen, die das Belegungsraster angeben, gemäß einer Periodizität empfangen werden, und/oder
wobei die Befehle weiterhin durch den Prozessor ausgeführt werden können, um die Vorrichtung zu veranlassen zum:
Senden einer Anfragenachricht für die Steuerinformationen, die das Belegungsraster angeben, wobei das Empfangen der Steuerinformationen, die das Belegungsraster angeben, wenigstens teilweise auf dem Senden der Anfragenachricht basiert.

6. Vorrichtung nach Anspruch 1, wobei die Befehle weiterhin durch den Prozessor ausgeführt werden können, um die Vorrichtung zu veranlassen zum:
Durchführen eines Betriebs gemäß einer mit dem Belegungsraster assoziierten Konfiguration, bis eine Angabe eines zweiten Belegungsrasters empfangen wird, und/oder
wobei die Befehle weiterhin durch den Prozessor ausgeführt werden können, um die Vorrichtung zu veranlassen zum:
Inkrementieren eines Zählers basierend wenigstens teilweise auf dem Senden der zweiten Signalisierung, und
Durchführen eines Betriebs gemäß einer mit dem Belegungsraster assoziierten Konfiguration, bis ein Wert des Zählers einen Schwellenwert erfüllt.

7. Vorrichtung nach Anspruch 1, wobei die Befehle für das Empfangen der Steuerinformationen, die das Belegungsraster angeben, durch den Prozessor ausgeführt werden können, um die Vorrichtung zu veranlassen zum:
Empfangen einer Angabe eines Mappings zwischen der Vielzahl von Zellen und der Vielzahl von Ressourcenelementen, wobei das Mapping ein Eins-zu-eins-Mapping zwischen der Vielzahl von Zellen und der Vielzahl von Ressourcenelementen ist, und/oder
wobei die Befehle weiterhin durch den Prozessor ausgeführt werden können, um die Vorrichtung zu veranlassen zum:
Empfangen einer Downlink-Steuerinformationen-Nachricht, die einen Schlitz für das UE für die Verwendung beim Senden der zweiten Signalisierung angibt, wobei der Schlitz durch eine Vielzahl von UEs verwendet wird für das Senden auf Ressourcenelementen aus der Vielzahl von Ressourcenelementen, die Zellen aus der Vielzahl von Zellen des geografischen Bereichs, die UEs aus der Vielzahl von UEs als belegt bestimmen, entsprechen, und/oder
wobei die Befehle weiterhin durch den Prozessor ausgeführt werden können, um die Vorrichtung zu veranlassen zum:
Empfangen einer Steuersignalisierung, die einen periodischen Satz von Schlitzen für das UE für die Verwendung beim Senden der zweiten Signalisierung angibt, wobei jeder Schlitz aus dem periodischen Satz von Schlitzen durch eine Vielzahl von UEs verwendet wird für das Senden auf Ressourcenelementen aus der Vielzahl von Ressourcenelementen, die Zellen aus der Vielzahl von Zellen des geografischen Bereichs, die durch UEs aus der Vielzahl von UEs als belegt bestimmt werden, entsprechen.

8. Vorrichtung nach Anspruch 1, wobei die Befehle weiterhin durch den Prozessor ausgeführt werden können, um die Vorrichtung zu veranlassen zum:
Unterlassen des Sendens über ein oder mehrere Ressourcenelemente aus der Vielzahl von Ressourcenelementen, die einer oder mehreren zweiten Zellen aus der Vielzahl von Zellen, die gemäß den Belegungsinformationen als nicht-belegt angegeben werden, entsprechen.

9. Eine Vorrichtung für eine drahtlose Kommunikation an einer Netzeinheit (105), aufweisend:
einen Prozessor (1435),
einen Speicher (1425), der mit dem Prozessor (1435) gekoppelt ist, und
Befehle, die in dem Speicher (1425) gespeichert sind und durch den Prozessor (1435) ausgeführt werden können, um die Vorrichtung zu veranlassen zum:
Senden (1805) von Steuerinformationen, die ein Belegungsraster angeben, das eine Vielzahl von Zellen in Entsprechung zu einem geografischen Bereich aufweist, wobei Zellen aus der Vielzahl von Zellen Ressourcenelementen aus einer Vielzahl von Ressourcenelementen eines Zeit-Frequenz-Ressourcenrasters entsprechen,
Empfangen (1810) einer Signalisierung über einen Satz von Ressourcenelementen aus der Vielzahl von Ressourcenelementen, und
Generieren (1815) eines aggregierten Belegungsrasters für den geografischen Bereich basierend wenigstens teilweise auf dem Bestimmen, für jedes Ressourcenelement aus dem Satz von Ressourcenelementen, dass eine Zelle aus der Vielzahl von Zellen in Entsprechung zu einem Ressourcenelement belegt oder nicht-belegt ist, basierend wenigstens teilweise auf einer über das Ressourcenelement empfangenen Energie und einem Energieschwellenwert.

10. Vorrichtung nach Anspruch 9, wobei die Befehle für das Bestimmen, dass die Zelle belegt ist, weiterhin durch den Prozessor ausgeführt werden können, um die Vorrichtung zu veranlassen zum:
Bestimmen, dass die Zelle belegt ist, basierend wenigstens teilweise darauf, dass die Energie des Ressourcenelements in Entsprechung zu der Zelle den Energieschwellenwert erfüllt, und/oder
wobei die Befehle weiterhin durch den Prozessor ausgeführt werden können, um die Vorrichtung zu veranlassen zum:
Bestimmen, dass die Zelle nicht-belegt ist, basierend wenigstens teilweise darauf, dass die Energie des Ressourcenelements in Entsprechung zu der Zelle unter dem Energieschwellenwert liegt, und/oder
wobei die Befehle weiterhin durch den Prozessor ausgeführt werden können, um die Vorrichtung zu veranlassen zum:
Senden, basierend wenigstens teilweise auf dem Generieren des aggregierten Belegungsrasters, einer dritten Signalisierung, die das aggregierte Belegungsraster angibt.

11. Vorrichtung nach Anspruch 9, wobei die Befehle für das Senden der Steuerinformationen durch den Prozessor ausgeführt werden können, um die Vorrichtung zu veranlassen zum:
Senden einer Angabe des geografischen Bereichs, einer Zellenform, einer Zellengröße oder einer Kombination aus diesen, wobei optional die Befehle weiterhin durch den Prozessor ausgeführt werden können, um die Vorrichtung zu veranlassen zum:
Senden einer Angabe einer Tabelle, die eine Vielzahl von Indizes enthält, wobei jeder Index aus der Vielzahl von Indizes einem oder mehreren des geografischen Bereichs, der Zellenform oder der Zellengröße entspricht, wobei die Angabe des geografischen Bereichs, der Zellenform, der Zellengröße oder einer Kombination aus diesen einen Index aus der Vielzahl von Indizes aufweist, und/oder
wobei die Steuerinformationen gemäß einer Periodizität gesendet werden, und/oder
wobei die Befehle weiterhin durch den Prozessor ausgeführt werden können, um die Vorrichtung zu veranlassen zum:
Empfangen einer Anfragenachricht für die Steuerinformationen, die das Belegungsraster angeben, wobei das Senden der Steuerinformationen, die das Belegungsraster angeben, wenigstens teilweise auf dem Empfangen der Anfragenachricht basiert.

12. Vorrichtung nach Anspruch 9, wobei die Befehle für das Senden der Steuerinformationen durch den Prozessor ausgeführt werden können, um die Vorrichtung zu veranlassen zum:
Senden einer ersten Konfiguration, die mit dem Generieren des aggregierten Belegungsrasters assoziiert ist, wobei die Befehle weiterhin durch den Prozessor ausgeführt werden können, um die Vorrichtung zu veranlassen zum:
Senden von zweiten Steuerinformationen, die eine zweite Konfiguration, die mit dem Generieren des aggregierten Belegungsrasters assoziiert ist, angeben, und
Wechseln, basierend wenigstens teilweise auf dem Senden der zweiten Steuerinformationen, von einem Betrieb gemäß der ersten Konfiguration zu einem Betrieb gemäß der zweiten Konfiguration, und/oder
wobei die Befehle für das Senden der Steuerinformationen durch den Prozessor ausgeführt werden können, um die Vorrichtung zu veranlassen zum:
Senden einer ersten Konfiguration, die mit dem Generieren des aggregierten Belegungsrasters assoziiert ist, wobei die Befehle weiterhin durch den Prozessor ausgeführt werden können, um die Vorrichtung zu veranlassen zum:
Inkrementieren eines Zählers basierend wenigstens teilweise auf dem Generieren des aggregierten Belegungsrasters, und
Senden von zweiten Steuerinformationen, die eine zweite Konfiguration, die mit dem Generieren des aggregierten Belegungsrasters assoziiert ist, angeben, basierend wenigstens teilweise darauf, dass ein Wert des Zählers einen Schwellenwert erfüllt.

13. Vorrichtung nach Anspruch 9, wobei die Befehle für das Senden der Steuerinformationen durch den Prozessor ausgeführt werden können, um die Vorrichtung zu veranlassen zum:
Senden einer Angabe eines Mappings zwischen der Vielzahl von Zellen und der Vielzahl von Ressourcenelementen, wobei das Mapping ein Eins-zu-eins-Mapping zwischen der Vielzahl von Zellen und der Vielzahl von Ressourcenelementen ist, und/oder
wobei die Befehle weiterhin durch den Prozessor ausgeführt werden können, um die Vorrichtung zu veranlassen zum:
Senden, an ein Benutzergerät (User Equipment bzw. UE), einer Downlink-Steuerinformationen-Nachricht, die einen Schlitz für das UE für die Verwendung beim Senden der Signalisierung über den Satz von Ressourcenelementen angibt, und/oder
wobei die Befehle weiterhin durch den Prozessor ausgeführt werden können, um die Vorrichtung zu veranlassen zum:
Senden, an ein Benutzergerät (User Equipment bzw. UE), einer Steuersignalisierung, die einen periodischen Satz von Schlitzen für das UE für die Verwendung beim Senden der Signalisierung über den Satz von Ressourcenelementen angibt.

14. Ein Verfahren für eine drahtlose Kommunikation an einem Benutzergerät (User Equipment bzw. UE) (115), aufweisend:
Empfangen (1505) von Steuerinformationen, die ein Belegungsraster angeben, das eine Vielzahl von Zellen in Entsprechung zu einem geografischen Bereich aufweist, wobei Zellen aus der Vielzahl von Zellen Ressourcenelementen aus einer Vielzahl von Ressourcenelementen eines Zeit-Frequenz-Ressourcenrasters entsprechen,
Empfangen (1510), von einem oder mehreren Sensoren, einer ersten Signalisierung, die Belegungsinformationen für einen Satz von Zellen aus der Vielzahl von Zellen angibt, und
Senden (1515), für jede Zelle aus dem Satz von Zellen, die gemäß den Belegungsinformationen belegt ist, einer zweiten Signalisierung über ein Ressourcenelement aus der Vielzahl von Ressourcenelementen, das einer belegten Zelle entspricht.

15. Ein Verfahren für eine drahtlose Kommunikation an einer Netzeinheit (105), aufweisend:
Senden (1805) von Steuerinformationen, die ein Belegungsraster angeben, das eine Vielzahl von Zellen in Entsprechung zu einem geografischen Bereich aufweist, wobei Zellen aus der Vielzahl von Zellen Ressourcenelementen aus einer Vielzahl von Ressourcenelementen eines Zeit-Frequenz-Ressourcenrasters entsprechen,
Empfangen (1810) einer Signalisierung über einen Satz von Ressourcenelementen aus der Vielzahl von Ressourcenelementen, und
Generieren (1815) eines aggregierten Belegungsrasters für den geografischen Bereich basierend wenigstens teilweise auf dem Bestimmen, für jedes Ressourcenelement aus dem Satz von Ressourcenelementen, dass eine Zelle aus der Vielzahl von Zellen in Entsprechung zu einem Ressourcenelement belegt oder nicht-belegt ist, basierend wenigstens teilweise auf einer über das Ressourcenelement empfangenen Energie und einem Energieschwellenwert.

## Revendications

1. Appareil pour une communication sans fil au niveau d'un équipement utilisateur, UE (115), comprenant :
un processeur (1040) ;
une mémoire (1030) couplée au processeur (1040) ; et
des instructions stockées dans la mémoire (1030) et exécutables par le processeur (1040) pour amener l'appareil à :
recevoir (1505) des informations de commande indiquant une grille d'occupation comprenant une pluralité de cellules correspondant à une zone géographique, des cellules de la pluralité de cellules correspondant à des éléments de ressource d'une pluralité d'éléments de ressource d'une grille de ressources temps-fréquence ;
recevoir (1510), en provenance d'un ou de plusieurs capteurs, une première signalisation indiquant des informations d'occupation pour un ensemble de cellules de la pluralité de cellules ; et
transmettre (1515), pour chaque cellule de l'ensemble de cellules qui est occupée selon les informations d'occupation, une deuxième signalisation via un élément de ressource de la pluralité d'éléments de ressource qui correspond à une cellule qui est occupée.

2. Appareil selon la revendication 1, dans lequel les instructions sont en outre exécutables par le processeur pour amener l'appareil à :
recevoir une troisième signalisation indiquant une grille d'occupation agrégée pour la zone géographique, la grille d'occupation agrégée étant sur la base au moins en partie de la deuxième signalisation.

3. Appareil selon la revendication 1, dans lequel la zone géographique comprend une première zone géographique, et les instructions sont en outre exécutables par le processeur pour amener l'appareil à :
déterminer une seconde zone géographique sur la base au moins en partie d'une portée associée au ou aux capteurs, dans lequel la transmission de la deuxième signalisation est sur la base au moins en partie du fait que la seconde zone géographique se trouve à l'intérieur d'au moins une partie de la première zone géographique.

4. Appareil selon la revendication 1, dans lequel les instructions pour recevoir les informations de commande sont exécutables par le processeur pour amener l'appareil à :
recevoir une indication de la zone géographique, d'une forme de cellule, d'une taille de cellule, ou d'une combinaison de celles-ci, dans lequel, éventuellement,
les instructions sont en outre exécutables par le processeur pour amener l'appareil à :
recevoir une indication d'une table qui comprend une pluralité d'indices, chaque indice de la pluralité d'indices correspondant à un ou plusieurs éléments parmi la zone géographique, la forme de cellule, ou la taille de cellule, dans lequel l'indication de la zone géographique, de la forme de cellule, de la taille de cellule, ou d'une combinaison de celles-ci comprend un indice de la pluralité d'indices.

5. Appareil selon la revendication 1, dans lequel les informations de commande indiquant la grille d'occupation sont reçues selon une périodicité, et/ou :
dans lequel les instructions sont en outre exécutables par le processeur pour amener l'appareil à :
transmettre un message de demande pour les informations de commande indiquant la grille d'occupation, dans lequel la réception des informations de commande indiquant la grille d'occupation est sur la base au moins en partie de la transmission du message de demande.

6. Appareil selon la revendication 1, dans lequel les instructions sont en outre exécutables par le processeur pour amener l'appareil à :
fonctionner conformément à une configuration associée à la grille d'occupation jusqu'à ce qu'une indication d'une seconde grille d'occupation soit reçue, et/ou :
dans lequel les instructions sont en outre exécutables par le processeur pour amener l'appareil à :
incrémenter un compteur sur la base au moins en partie de la transmission de la deuxième signalisation ; et
fonctionner conformément à une configuration associée à la grille d'occupation jusqu'à ce qu'une valeur du compteur satisfasse un seuil.

7. Appareil selon la revendication 1, dans lequel les instructions pour recevoir les informations de commande indiquant la grille d'occupation sont exécutables par le processeur pour amener l'appareil à :
recevoir une indication d'un mappage entre la pluralité de cellules et la pluralité d'éléments de ressource, dans lequel le mappage est un mappage biunivoque entre la pluralité de cellules et la pluralité d'éléments de ressource, et/ou :
dans lequel les instructions sont en outre exécutables par le processeur pour amener l'appareil à :
recevoir un message d'informations de commande de liaison descendante indiquant un créneau à utiliser par l'UE pour transmettre la deuxième signalisation, le créneau étant utilisé par une pluralité d'UE pour transmettre sur des éléments de ressource de la pluralité d'éléments de ressource qui correspondent à des cellules de la pluralité de cellules de la zone géographique que des UE de la pluralité d'UE déterminent comme étant occupées, et/ou :
dans lequel les instructions sont en outre exécutables par le processeur pour amener l'appareil à :
recevoir une signalisation de commande indiquant un ensemble périodique de créneaux à utiliser par l'UE pour transmettre la deuxième signalisation, chaque créneau de l'ensemble périodique de créneaux étant utilisé par une pluralité d'UE pour transmettre sur des éléments de ressource de la pluralité d'éléments de ressource qui correspondent à des cellules de la pluralité de cellules de la zone géographique que des UE de la pluralité d'UE déterminent comme étant occupées.

8. Appareil selon la revendication 1, dans lequel les instructions sont en outre exécutables par le processeur pour amener l'appareil à :
s'abstenir de transmettre via un ou plusieurs éléments de ressource de la pluralité d'éléments de ressource qui correspondent à une ou plusieurs secondes cellules de la pluralité de cellules qui sont indiquées comme étant inoccupées selon les informations d'occupation.

9. Appareil pour une communication sans fil au niveau d'une entité de réseau (105), comprenant :
un processeur (1435) ;
une mémoire (1425) couplée au processeur (1435) ; et
des instructions stockées dans la mémoire (1425) et exécutables par le processeur (1435) pour amener l'appareil à :
transmettre (1805) des informations de commande indiquant une grille d'occupation comprenant une pluralité de cellules correspondant à une zone géographique, des cellules de la pluralité de cellules correspondant à des éléments de ressource d'une pluralité d'éléments de ressource d'une grille de ressources temps-fréquence ;
recevoir (1810) une signalisation via un ensemble d'éléments de ressource de la pluralité d'éléments de ressource ; et
générer (1815) une grille d'occupation agrégée pour la zone géographique sur la base au moins en partie de la détermination, pour chaque élément de ressource de l'ensemble d'éléments de ressource, du fait qu'une cellule de la pluralité de cellules correspondant à un élément de ressource est occupée ou inoccupée sur la base au moins en partie d'une énergie reçue via l'élément de ressource et d'un seuil d'énergie.

10. Appareil selon la revendication 9, dans lequel les instructions pour déterminer que la cellule est occupée sont en outre exécutables par le processeur pour amener l'appareil à :
déterminer que la cellule est occupée sur la base au moins en partie du fait que l'énergie de l'élément de ressource correspondant à la cellule satisfait le seuil d'énergie, et/ou :
dans lequel les instructions sont en outre exécutables par le processeur pour amener l'appareil à :
déterminer que la cellule est inoccupée sur la base au moins en partie du fait que l'énergie de l'élément de ressource correspondant à la cellule est inférieure au seuil d'énergie, et/ou :
dans lequel les instructions sont en outre exécutables par le processeur pour amener l'appareil à :
transmettre, sur la base au moins en partie de la génération de la grille d'occupation agrégée, une troisième signalisation indiquant la grille d'occupation agrégée.

11. Appareil selon la revendication 9, dans lequel les instructions pour transmettre les informations de commande sont exécutables par le processeur pour amener l'appareil à :
transmettre une indication de la zone géographique, d'une forme de cellule, d'une taille de cellule, ou d'une combinaison de celles-ci, dans lequel, éventuellement, les instructions sont en outre exécutables par le processeur pour amener l'appareil à :
transmettre une indication d'une table qui comprend une pluralité d'indices, chaque indice de la pluralité d'indices correspondant à un ou plusieurs éléments parmi la zone géographique, la forme de cellule, ou la taille de cellule, dans lequel l'indication de la zone géographique, de la forme de cellule, de la taille de cellule, ou d'une combinaison de celles-ci comprend un indice de la pluralité d'indices, et/ou :
dans lequel les informations de commande sont transmises selon une périodicité, et/ou :
dans lequel les instructions sont en outre exécutables par le processeur pour amener l'appareil à :
recevoir un message de demande pour les informations de commande indiquant la grille d'occupation, dans lequel la transmission des informations de commande indiquant la grille d'occupation est sur la base au moins en partie de la réception du message de demande.

12. Appareil selon la revendication 9, dans lequel les instructions pour transmettre les informations de commande sont exécutables par le processeur pour amener l'appareil à :
transmettre une première configuration associée à la génération de la grille d'occupation agrégée, dans lequel les instructions sont en outre exécutables par le processeur pour amener l'appareil à :
transmettre de secondes informations de commande indiquant une seconde configuration associée à la génération de la grille d'occupation agrégée ; et
commuter, sur la base au moins en partie de la transmission des secondes informations de commande, d'un fonctionnement selon la première configuration vers un fonctionnement selon la seconde configuration, et/ou :
dans lequel les instructions pour transmettre les informations de commande sont exécutables par le processeur pour amener l'appareil à :
transmettre une première configuration associée à la génération de la grille d'occupation agrégée, dans lequel les instructions sont en outre exécutables par le processeur pour amener l'appareil à :
incrémenter un compteur sur la base au moins en partie de la génération de la grille d'occupation agrégée ; et
transmettre de secondes informations de commande indiquant une seconde configuration associée à la génération de la grille d'occupation agrégée sur la base au moins en partie du fait qu'une valeur du compteur satisfait un seuil.

13. Appareil selon la revendication 9, dans lequel les instructions pour transmettre les informations de commande sont exécutables par le processeur pour amener l'appareil à :
transmettre une indication d'un mappage entre la pluralité de cellules et la pluralité d'éléments de ressource, dans lequel le mappage est un mappage biunivoque entre la pluralité de cellules et la pluralité d'éléments de ressource, et/ou :
dans lequel les instructions sont en outre exécutables par le processeur pour amener l'appareil à :
transmettre, à un équipement utilisateur, UE, un message d'informations de commande de liaison descendante indiquant un créneau à utiliser par l'UE pour transmettre la signalisation via l'ensemble d'éléments de ressource, et/ou :
dans lequel les instructions sont en outre exécutables par le processeur pour amener l'appareil à :
transmettre, à un équipement utilisateur, UE, une signalisation de commande indiquant un ensemble périodique de créneaux à utiliser par l'UE pour transmettre la signalisation via l'ensemble d'éléments de ressource.

14. Procédé pour une communication sans fil au niveau d'un équipement utilisateur, UE (115), comprenant :
une réception (1505) d'informations de commande indiquant une grille d'occupation comprenant une pluralité de cellules correspondant à une zone géographique, des cellules de la pluralité de cellules correspondant à des éléments de ressource d'une pluralité d'éléments de ressource d'une grille de ressources temps-fréquence ;
une réception (1510), en provenance d'un ou de plusieurs capteurs, d'une première signalisation indiquant des informations d'occupation pour un ensemble de cellules de la pluralité de cellules ; et
une transmission (1515), pour chaque cellule de l'ensemble de cellules qui est occupée selon les informations d'occupation, d'une deuxième signalisation via un élément de ressource de la pluralité d'éléments de ressource qui correspond à une cellule qui est occupée.

15. Procédé pour une communication sans fil au niveau d'une entité de réseau (105), comprenant :
une transmission (1805) d'informations de commande indiquant une grille d'occupation comprenant une pluralité de cellules correspondant à une zone géographique, des cellules de la pluralité de cellules correspondant à des éléments de ressource d'une pluralité d'éléments de ressource d'une grille de ressources temps-fréquence ;
une réception (1810) d'une signalisation via un ensemble d'éléments de ressource de la pluralité d'éléments de ressource ; et
une génération (1815) d'une grille d'occupation agrégée pour la zone géographique sur la base au moins en partie de la détermination, pour chaque élément de ressource de l'ensemble d'éléments de ressource, du fait qu'une cellule de la pluralité de cellules correspondant à un élément de ressource est occupée ou inoccupée sur la base au moins en partie d'une énergie reçue via l'élément de ressource et d'un seuil d'énergie.
